# NEUE EUROPÄISCHE PATENTSCHRIFT

(11) **EP 2 141 034 B2**
(45) Veröffentlichungstag und Bekanntmachung des Hinweises auf die Entscheidung über den Einspruch: **19.06.2019**
(45) Hinweis auf die Patenterteilung: 29.02.2012
(21) Anmeldenummer: 09171110.1
(22) Anmeldetag: 26.07.2007
(51) Int. Cl.: B60D 1/54

(54) **Anhängekupplung**
Trailer tow-bar
Attelage

(30) Priorität: 29.07.2006 DE 102006035261
(43) Veröffentlichungstag der Anmeldung: 06.01.2010
(62) Teilanmeldung aus: 07014638.6
(73) Patentinhaber: Bosal ACPS Holding 2 B.V., 4131 PK Vianen (NL)
(72) Erfinder: Riehle, Jörg, 71679, Asperg (DE); Gentner, Wolfgang, 71711, Steinheim (DE); Still, Jürgen, 71640, Ludwigsburg (DE)
(74) Vertreter: Hoeger, Stellrecht & Partner Patentanwälte mbB

(56) Entgegenhaltungen:
- EP-A- 1 504 928
- EP-A- 1 533 149
- EP-A- 1 741 572
- EP-A1- 0 799 732
- DE-A1- 19 613 428
- DE-A1- 19 902 355
- DE-A1-102004 004 504
- DE-B3- 10 252 722

## Beschreibung

Die Erfindung betrifft eine Anhängekupplung umfassend einen zwischen einer Arbeitsstellung und einer Ruhestellung bewegbaren Kugelhals mit einem an einem ersten Ende angeordneten Schwenklagerkörper und einer an einem zweiten Ende angeordneten Kupplungskugel, eine fahrzeugfest angeordnete Schwenklagereinheit, in welcher der Schwenklagerkörper durch eine Schwenkbewegung um eine Schwenkachse zwischen der Arbeitsstellung und der Ruhestellung verschwenkbar aufgenommen ist, und eine durch einen Antrieb antreibbare Drehblockiereinrichtung gemäss dem Oberbegriff des Anspruchs 1.

Eine derartige Anhängekupplung ist aus DE 199 02 355 A1 bekannt.

Bei diesen Anhängekupplungen sind jedoch der Antrieb für die Drehblockiereinrichtung und die Drehblockiereinrichtung selbst konstruktiv aufwändig aufgebaut.

Der Erfindung liegt daher die Aufgabe zugrunde, eine Anhängekupplung der gattungsgemäßen Art derart zu verbessern, dass diese konstruktiv möglichst hohe, auf den Kugelhals wirkende Lastmomente aufnehmen kann.

Diese Aufgabe wird bei einer Anhängekupplung der eingangs beschriebenen Art erfindungsgemäß durch die Merkmale des Anspruchs 1 gelöst.

Der Vorteil der erfindungsgemäßen Lösung ist darin zu sehen, dass einerseits die Drehblockiereinrichtung einfach aufgebaut ist und hohen Lastmomenten Stand hält und andererseits der Betätigungskörper der Drehblockiereinrichtung durch den als Stellantrieb ausgebildeten Antrieb in einfacher Weise zwischen seiner Drehblockierstellung und seiner Freilaufstellung bewegbar ist.

Eine besonders einfache Bewegung des Betätigungskörpers ist erfindungsgemäß dadurch gegeben, dass der Antrieb über ein selbsthemmendes Getriebe auf den Betätigungskörper wirkt. Mit einem derartigen selbsthemmenden Getriebe ist es in einfacher Weise möglich, den Betätigungskörper in die jeweilige Stellung, das heißt die mindestens eine Drehblockierstellung oder die Freilaufstellung zu bewegen und in dieser zu halten, ohne dass bei Belastung des Kugelhalses eine Rückwirkung auf den Antrieb erfolgt.

Eine besonders zweckmäßige Lösung sieht dabei vor, dass das selbsthemmende Getriebe ein Spindelgetriebe mit einer Gewindespindel umfasst.

Prinzipiell könnte das Spindelgetriebe mit der Gewindespindel an beliebiger Stelle vorgesehen sein und über weitere Übertragungselemente auf den Betätigungskörper wirken.

Eine konstruktiv besonders einfache Lösung sieht vor, dass der Betätigungskörper durch eine mit der Gewindespindel zusammenwirkende Spindelmutter bewegbar ist.

Konstruktiv besonders einfach ist dabei eine Lösung, bei welcher der Betätigungskörper die Gewindespindel umgebend angeordnet ist, so dass die Gewindespindel einen Durchbruch des Betätigungskörpers durchsetzt.

Insbesondere kann bei dieser Lösung der Durchbruch unmittelbar mit einem in die Gewindespindel eingreifenden Gegengewinde versehen sein oder es ist in dem Durchbruch eine Spindelmutter angeordnet.

Prinzipiell ist es im Rahmen der erfindungsgemäßen Lösung denkbar, die Betätigungsrichtung, in welcher der Betätigungskörper bewegbar ist, frei zu wählen. Beispielsweise könnte die Betätigungsrichtung eine Drehrichtung sein.

Konstruktiv besonders einfach lässt sich jedoch eine Lösung realisieren, bei welcher der Betätigungskörper in einer zur Schwenkachse im Wesentlichen parallelen Betätigungsrichtung bewegbar ist.

Hinsichtlich der Ausbildung des Betätigungskörpers wurden im Zusammenhang mit der bisherigen Erläuterung der erfindungsgemäßen Lösung keine näheren Angaben gemacht. So sieht eine vorteilhafte Lösung vor, dass der Betätigungskörper in seiner Betätigungsrichtung aufeinanderfolgend eine Rückzugsaufnahme und eine Druckfläche für den mindestens einen Drehblockierkörper aufweist.

Eine derartige Rückzugsaufnahme und eine Druckfläche ermöglichen es, durch Verschieben des Betätigungskörpers in der Betätigungsrichtung entweder die Drehblockierkörper in ihre Freilaufstellung zu bringen, nämlich dann, wenn sie in die Rückzugsaufnahme eintauchen, oder in ihre Drehblockierstellung zu bringen, nämlich dann, wenn sie durch die Druckfläche beaufschlagt sind.

Die Druckfläche könnte dabei beliebig ausgebildet sein. Wesentlich für die Druckfläche ist lediglich, dass diese in radialer Richtung zur Schwenkachse variiert.

Eine vorteilhafte Ausführungsform einer Druckfläche sieht vor, dass die Druckfläche für den mindestens einen Drehblockierkörper eine Keilfläche ist.

Eine derartige Keilfläche kann dabei eine ebene Fläche sein.

Im Fall mehrerer Drehblockierkörper ist es jedoch besonders günstig, wenn die Druckfläche eine Konusfläche ist, mit welcher durch eine einfache lineare Bewegung eine radiale Bewegung der Drehblockierkörper in ihrer Führungsrichtung bewirkt werden kann.

Prinzipiell ist es im Rahmen der erfindungsgemäßen Lösung möglich, mit einer Druckfläche und einer Rückzugsaufnahme zu arbeiten, wobei der Betätigungskörper in seiner Betätigungsrichtung dabei zwischen seiner Drehblockierstellung und seiner Freilaufstellung hin und her zu bewegen ist.

Eine besonders günstige Lösung sieht jedoch vor, dass der Betätigungskörper in zwei Drehblockierstellungen bewegbar ist. Dies hat den Vorteil, dass damit durch eine einfachere Bewegungskinematik beim Bewegen des Betätigungskörpers eine Verriegelung des Schwenklagerkörpers in zwei Drehstellungen erreichbar ist.

Beispielsweise wäre es denkbar, für jede der Drehblockierstellungen eigene Drehblockierkörper vorzusehen.

Besonders günstig ist jedoch eine Lösung, bei welcher der Betätigungskörper durch eine Bewegung in einer einzigen Bewegungsrichtung von einer ersten Drehblockierstellung in eine Freilaufstellung und dann in eine zweite Drehblockierstellung bewegbar ist.

Diese Lösung vereinfacht die Bewegungskinematik für den Betätigungskörper erheblich, da mit einer in einer einzigen Richtung verlaufenden Bewegung zwei Drehblockierstellungen und zwischen diesen eine Freilaufstellung erreichbar ist und durch Umkehr der Bewegung wiederum dieselbe Folge von Drehblockierstellung, Freilaufstellung und nachfolgender Drehblockierstellung durchlaufen werden kann.

Eine konstruktiv besonders einfache und günstige Lösung sieht vor, dass der Betätigungskörper für jeden Drehblockierkörper zwei Druckflächen aufweist, wobei mit diesen Druckflächen jeweils die Drehblockierstellung des Drehblockierkörpers erreicht werden kann.

Besonders günstig ist es dabei, wenn die Druckflächen bei einer Bewegung des Betätigungskörpers in einer Richtung unterschiedlich wirken. Eine derartige unterschiedliche Wirkung ist so zu verstehen, dass bei Bewegung des Betätigungskörpers in einer Bewegungsrichtung eine Druckfläche so verläuft, dass deren Wirkung auf einen Drehblockierkörper sich verringert, während die andere Druckfläche so verläuft, dass deren Wirkung auf den Drehblockierkörper zunimmt.

Dies lässt sich im einfachsten Fall dadurch realisieren, dass die Druckflächen unterschiedliche Steigungen aufweisen.

Ferner ist es beim Vorsehen zweier Druckflächen günstig, wenn eine erste der Druckflächen der Arbeitsstellung und eine zweite der Druckflächen der Ruhestellung zugeordnet ist, so dass zum Verriegeln in der Arbeitsstellung die erste der Druckflächen wirksam wird, während zum Verriegeln in der Ruhestellung die zweite der Druckflächen wirksam wird.

Um in einfacher Weise eine Freilaufstellung realisieren zu können, ist es zweckmäßig, wenn zwischen den zwei Druckflächen eine Rückzugsaufnahme für den jeweiligen Drehblockierkörper angeordnet ist, so dass durch Verschieben des Betätigungskörpers beispielsweise ein Drehblockierkörper von seiner durch die erste Druckfläche bewirkten Drehblockierstellung durch Wechselwirkung mit der Rückzugsaufnahme in die Freilaufstellung bringbar ist und im Anschluss an die Rückzugsaufnahme wieder durch Wechselwirkung mit der anderen der Druckflächen in eine Drehblockierstellung bringbar ist.

Damit steht auch der Betätigungskörper dann, wenn die erste der Druckflächen wirksam ist, in einer ersten Drehblockierstellung, dann wenn die Rückzugsaufnahme wirksam ist, in der Freilaufstellung und dann wenn die zweite der Druckflächen wirksam ist in der zweiten Drehblockierstellung.

Insbesondere beim Bewegen des Betätigungskörpers in einer im Wesentlichen zur Schwenkachse parallelen Richtung lässt sich somit durch eine Linearbewegung in einer einzigen Richtung ein Übergang von einer Verriegelung des Schwenklagerkörpers entsprechend der ersten Drehblockierstellung in eine frei drehbare Stellung des Schwenklagerkörpers entsprechend der Freilaufstellung und dann wieder eine Verriegelung des Schwenklagerkörpers durch die zweite Drehblockierstellung realisieren.

Ein derart ausgebildeter Betätigungskörper lässt sich in besonders einfacher Weise durch einen Antrieb, insbesondere einen Stellantrieb bewegen, um den Schwenklagerkörper in zwei Drehstellungen, nämlich der Arbeitsstellung und der Ruhestellung zu verriegeln und zwischen diesen beiden Drehstellungen eine freie Drehbarkeit des Schwenklagerkörpers zu realisieren, da für den Übergang von der verriegelnden Stellung in die frei drehbare Stellung des Schwenklagerkörpers und den weiteren Übergang von der frei drehbaren Stellung des Schwenklagerkörpers in eine wiederum verriegelnde Stellung nur eine Bewegung in einer Drehrichtung erforderlich ist und somit keine Drehrichtungsumkehr beim Antrieb realisiert werden muss, die es zwingend erforderlich machen würde, die einzelnen Bewegungszustände des Schwenklagerkörpers und des Betätigungskörpers sensorisch zu erfassen und entsprechend auszuwerten.

Im Zusammenhang mit den bisherigen Lösungen wurde lediglich der Antrieb der Drehblockiereinrichtung erläutert, welcher es erlaubt, einen Übergang der Drehblockiereinrichtung von mindestens einer Drehblockierstellung in eine Freilaufstellung und umgekehrt zu realisieren.

Besonders vorteilhaft ist eine erfindungsgemäße Lösung dann, wenn diese auch einen motorischen Antrieb für das Ausführen der Schwenkbewegung des Schwenklagerkörpers vorsieht.

Beispielsweise ist es denkbar, zwei motorische Antriebe vorzusehen, wobei ein motorischer Antrieb die Drehblockiereinrichtung antreibt und ein motorischer Antrieb zur Durchführung der Schwenkbewegung des Schwenklagerkörpers vorgesehen ist.

Insbesondere da ein Antreiben der Drehblockiereinrichtung stets zu Zeiten erfolgt, in denen keine Schwenkbewegung des Schwenklagerkörpers erfolgen soll und andererseits eine Schwenkbewegung des Schwenklagerkörpers stets dann erfolgt, wenn kein Antrieb der Drehblockiereinrichtung erforderlich ist, ist es denkbar, eine Umschalteinrichtung vorzusehen, die eine zugeführte Antriebsenergie, beispielsweise von einer Stromquelle, wechselweise von einem Antrieb auf den anderen Antrieb umschaltet, so dass die von einer separaten, beispielsweise kraftfahrzeugseitigen Versorgungseinrichtung zur Verfügung gestellte Antriebsleistung entweder für das Betätigen der Drehblockiereinrichtung oder das Schwenken des Schwenklagerkörpers genutzt werden kann. In diesem Fall ist allerdings über eine entsprechende Sensorik zu erfassen, wann die Drehblockiereinrichtung in der Drehblockierstellung oder der Freilaufstellung steht und wann der Schwenklagerkörper in der der Arbeitsstellung entsprechenden Stellung oder der der Ruhestellung entsprechenden Stellung steht und entsprechend den von der Sensorik detektierten Stellungen die Antriebsleistung von einem Antrieb auf den anderen umzuschalten.

Im Fall eines Antriebs der Drehblockiereinrichtung unabhängig von dem Antrieb für die Schwenkbewegung des Schwenklagerkörpers besteht das Problem, dass im Fall einer Störung die Schwierigkeit auftritt, eindeutige Ausgangspositionen sowohl für die Schwenkbewegung des Schwenklagerkörpers als auch für die Drehblockiereinrichtung aufzufinden.

Alternativ oder ergänzend zu den bislang beschriebenen Lösungen sieht daher eine vorteilhafte Lösung vor, dass der Antrieb für die Drehblockiereinrichtung und der Antrieb für die Schwenkbewegung des Schwenklagerkörpers durch ein Planetengetriebe gekoppelt sind.

Ein derartiges Planetengetriebe erlaubt es, die beiden Bewegungen miteinander zu koppeln.

Im Fall eines derartigen Planetengetriebes könnten nach wie vor zwei separate motorische Antriebe vorgesehen sein, deren Antriebsleistungen sich gegebenenfalls durch das Planetengetriebe addieren ließen.

Würde beispielsweise beim Planetengetriebe das Sonnenrad durch einen Antrieb angetrieben und ein Planetenträger für die Planetenräder durch einen anderen motorischen Antrieb, so könnten sich die Antriebsleistungen bei stillstehendem Hohlrad für die Drehbewegung des Sonnenrads und den beispielsweise damit gekoppelten Antrieb für die Drehblockiereinrichtung addieren, während bei Stillsetzen des motorischen Antriebs für das Sonnenrad der weiterhin wirksame motorische Antrieb für den Planetenträger dann zum Antreiben des Hohlrades, beispielsweise für das Ausführen der Schwenkbewegung des Schwenklagerkörpers, eingesetzt werden könnte.

Der motorische Antrieb für das Sonnenrad würde einerseits zusätzliche Antriebsleistungen im Fall des stillstehenden Hohlrades bringen und andererseits ein einfaches Umschalten auf den Antrieb des Hohlrades erlauben, wenn der Antrieb des Sonnenrads stillgesetzt wird.

Besonders geeignet ist jedoch ein derartiges Planetengetriebe, bei dem das Planetengetriebe durch einen einzigen motorischen Antrieb antreibbar ist.

Vorzugsweise ist dabei das Planetengetriebe zwischen dem Antrieb für die Drehblockiereinrichtung und dem Antrieb für die Schwenkbewegung des Schwenklagerkörpers derart integriert, dass das Planetengetriebe einen Wechsel zwischen einem Antrieb der Drehblockiereinrichtung und der Schwenkbewegung des Schwenklagerkörpers erlaubt.

Beispielsweise ist dabei vorgesehen, dass ein Planetenradträger des Planetengetriebes durch den motorischen Antrieb antreibbar ist.

Ferner ist zweckmäßigerweise vorgesehen, dass ein Sonnenrad des Planetengetriebes mit dem Antrieb für die Drehblockiereinrichtung gekoppelt ist.

Ferner ist zweckmäßigerweise vorgesehen, dass ein Hohlrad des Planetengetriebes mit dem Antrieb für die Schwenkbewegung gekoppelt ist.

Günstigerweise ist dabei vorgesehen, dass das Hohlrad drehfest mit dem Schwenklagerteil gekoppelt ist.

Im einfachsten Fall ist das Hohlrad unmittelbar am Schwenklagerteil angeordnet.

Es bestehen aber auch noch andere Möglichkeiten der Zuordnung der einzelnen Getriebeelemente des Planetengetriebes.

Beispielsweise wäre es ebenfalls denkbar, den Planetenradträger mit dem Stellantrieb für die Drehblockiereinrichtung zu koppeln oder den Planetenradträger mit dem Schwenklagerteil zu koppeln.

Um bei einem Planetengetriebe, welches durch einen einzigen motorischen Antrieb angetrieben ist, entweder die Drehblockiereinrichtung anzutreiben oder die Schwenkbewegung anzutreiben ist vorteilhafterweise vorgesehen, dass je nach Hemmung des Antriebs der Drehblockiereinrichtung oder der Schwenkbewegung ein Antreiben der Schwenkbewegung oder der Drehblockiereinrichtung erfolgt.

Eine derartige Hemmung der Schwenkbewegung oder der Drehblockiereinrichtung ist in unterschiedlicher Art und Weise realisierbar.

Die Hemmung der Schwenkbewegung ist in einfacher Weise dadurch realisierbar, dass das Schwenklagerteil relativ zum Führungskörper verriegelbar ist, so dass beim Verriegeln des Schwenklagerteils zwangsläufig eine Hemmung der Schwenkbewegung vorliegt.

Eine Hemmung des Antriebs der Drehblockiereinrichtung kann in unterschiedlichster Art und Weise erfolgen.

Beispielsweise wäre es - wie bereits erwähnt - denkbar, der Drehblockiereinrichtung einen zusätzlichen motorischen Antrieb zuzuordnen, der selbsthemmend ist und durch Abschalten dieses motorischen Antriebs die Drehblockiereinrichtung zu hemmen.

Dabei wäre es beispielsweise möglich, den zusätzlichen motorischen Antrieb für die Drehblockiereinrichtung so lange zuzuschalten, solange die Schwenkbewegung gehemmt ist und die Drehblockiereinrichtung angetrieben werden soll, in dem Moment, in dem jedoch die Schwenkbewegung freigegeben ist und der Antrieb der Drehblockiereinrichtung gehemmt werden soll, den zusätzlichen Antrieb für die Drehblockiereinrichtung abzuschalten und dabei den Antrieb der Drehblockiereinrichtung über das Planetengetriebe zu hemmen.

Damit erfolgt zwangsläufig bei weiterem Antreiben des Planetengetriebes ein Antreiben der Schwenkbewegung.

Eine besonders günstige Lösung sieht dabei vor, dass zur Hemmung des Antriebs der Drehblockiereinrichtung mindestens eine Hemmvorrichtung vorgesehen ist.

Eine derartige Hemmvorrichtung könnte - wie bei Planetengetrieben üblich - beispielsweise eine Bremseinrichtung sein, so dass ein Antrieb der Drehblockiereinrichtung gebremst erfolgt.

Dabei könnte die Hemmvorrichtung beispielsweise unmittelbar am Planetengetriebe wirksam sein.

Es wäre aber auch denkbar, die Hemmvorrichtung auf den Stellantrieb wirken zu lassen. Eine zweckmäßige Lösung sieht vor, dass die mindestens eine Hemmvorrichtung auf den Betätigungskörper der Drehblockiereinrichtung wirkt.

Die Hemmvorrichtung kann in unterschiedlichster Art und Weise steuerbar sein. Eine günstige Lösung sieht vor, dass die mindestens eine Hemmvorrichtung in Abhängigkeit von einer Drehstellung des Schwenklagerkörpers steuerbar ist.

Prinzipiell ist bei einer Drehblockierstellung und einer Freilaufstellung lediglich eine Hemmvorrichtung erforderlich, die den Übergang von der Freilaufstellung in die Drehblockierstellung so lange hemmt, bis die jeweilige Arbeitsstellung oder die jeweilige Ruhestellung erreicht ist.

Ist jedoch der Arbeitsstellung die erste Drehblockierstellung und der Ruhestellung die zweite Drehblockierstellung zugeordnet, so ist es im Hinblick auf eine konstruktiv einfache Lösung günstig, wenn zwei Hemmvorrichtungen vorgesehen sind, wobei jeweils eine Hemmvorrichtung einen Übergang von der Freilaufstellung in jeweils eine der Drehblockierstellungen so lange hemmt, bis die jeweilige Drehstellung, das heißt die Arbeitsstellung oder die Ruhestellung, des Schwenklagerkörpers erreicht ist.

Die Hemmvorrichtungen können dabei in unterschiedlichster Art und Weise ausgebildet sein.

So sieht eine vorteilhafte Lösung vor, dass die Hemmvorrichtung mindestens einen Hemmkörper aufweist, der zwischen dem Betätigungskörper und dem Schwenklagerkörper wirksam ist.

Eine derartige konstruktive Lösung ist dadurch besonders günstig, dass der Hemmkörper unmittelbar zwischen dem Schwenklagerkörper und dem Betätigungskörper wirksam ist und somit die beiden Bewegungen in einfacher Weise abfragen und gegebenenfalls die Bewegung des Betätigungskörpers hemmen kann.

Um die Stellungen von Schwenklagerkörper und Betätigungskörper zu erfassen ist vorzugsweise vorgesehen, dass der Betätigungskörper und der Schwenklagerkörper jeweils eine Kulissenbahn aufweisen, welche mit dem Hemmkörper zusammenwirkt.

Beispielsweise ist in diesem Fall vorgesehen, dass ein Hemmkörper für einen Übergang von der Freilaufstellung in eine der Drehblockierstellungen vorgesehen ist.

Dabei wirkt der Hemmkörper vorzugsweise so, dass er die Bewegung des Betätigungskörpers von der Freilaufstellung in die eine Drehblockierstellung so lange in der Freilaufstellung hemmt, bis der Schwenklagerkörper in der durch die Drehblockierstellung zu blockierenden Arbeits- oder Ruhestellung steht.

Ferner ist vorzugsweise ein Hemmkörper für einen Übergang von der Freilaufstellung in die andere Drehblockierstellung vorgesehen.

In diesem Fall ist der Hemmkörper so ausgebildet und wirkt derart mit den Kulissenbahnen zusammen, dass dieser die Bewegung des Betätigungskörpers von der Freilaufstellung in die andere Drehblockierstellung so lange in der Freilaufstellung hemmt, bis der Schwenklagerkörper in der durch die andere Drehblockierstellung zu blockierenden Ruhe- oder Arbeitsstellung steht.

Alternativ oder ergänzend sieht eine bevorzugte Lösung vor, dass der Hemmkörper von einem elastischen Kraftspeicher in Richtung seiner eine Hemmwirkung ausübenden Stellung beaufschlagt ist.

Hinsichtlich der Anordnung des Planetengetriebes wurden bislang keine näheren Angaben gemacht.

Prinzipiell könnte das Planetengetriebe so angeordnet sein, dass es auf einer einem Tragelement der Schwenklagereinheit zugewandten Seite des Betätigungskörpers liegt.

Konstruktiv besonders kompakt lässt sich jedoch eine Lösung realisieren, bei welcher das Planetengetriebe auf einer dem Tragelement der Schwenklagereinheit gegenüberliegenden Seite des Betätigungskörpers angeordnet ist.

Alternativ oder ergänzend zu den bislang beschriebenen Lösungen sieht eine weitere Lösung der erfindungsgemäßen Aufgabe vor, dass der Betätigungskörper in der Arbeitsstellung durch eine Sicherungsvorrichtung gesichert ist. Eine derartige Sicherungsvorrichtung erlaubt es, den Betätigungskörper zusätzlich zu dem vorgesehenen Vorschub oder Stellantrieb zu sichern und somit die Sicherheit der erfindungsgemäßen Anhängekupplung, insbesondere in der Arbeitsstellung, zu verbessern.

Besonders vorteilhaft ist es, wenn die Sicherungsvorrichtung durch ein Antriebselement betätigbar ist, so dass ein Lösen der Sicherungsvorrichtung bei Antrieb des Betätigungskörpers lösbar ist.

Vorzugsweise ist hierzu das Antriebselement so ausgebildet, dass es eine Betätigungsbahn der Sicherungsvorrichtung antreibt.

Die Sicherungsvorrichtung kann in verschiedener Art und Weise ausgebildet sein. Eine bevorzugte Lösung sieht vor, dass diese Sicherungsvorrichtung einen Sicherungskörper aufweist, welcher mit einer mit dem Betätigungskörper bewegungsgekoppelten Sicherungskulisse zusammenwirkt.

Vorzugsweise ist dabei der Sicherungskörper und die Sicherungskulisse so ausgebildet, dass eine formschlüssige Festlegung mindestens einer Stellung des Betätigungskörpers, insbesondere der Drehblockierstellung in der Arbeitsstellung des Kugelhalses, realisierbar ist.

Im einfachsten Fall ist dabei die Sicherungskulisse so ausgebildet, dass sie mindestens eine Aufnahme aufweist, mit welcher der Sicherungskörper in Eingriff bringbar ist.

Ergänzend ist der Betätigungskörper in der der Arbeitsstellung entsprechenden Drehblockierstellung durch einen in Richtung der Drehblockierstellung wirkenden elastischen Kraftspeicher beaufschlagbar.

Ein derartiger elastischer Kraftspeicher schafft die Möglichkeit, eine spielfreie Fixierung des Schwenklagerkörpers zu erreichen, in dem der Betätigungskörper in der der Arbeitsstellung entsprechenden Drehblockierstellung ständig durch eine Kraft beaufschlagt ist und somit ständig den Drehblockierkörper in die entsprechende Aufnahme drückt und somit das Spiel zwischen Drehblockierkörper und Aufnahme sowie Führungskörper und Drehblockierkörper im Wesentlichen eliminiert.

Ferner hat eine derartige Beaufschlagung des Betätigungskörpers mit einem elastischen Kraftspeicher den Vorteil, dass damit auch Spiel durch Verschleiß, beispielsweise durch eine Weitung der entsprechenden Aufnahmen eliminiert werden kann.

Vorzugsweise ist hierzu der elastische Kraftspeicher durch den Stellantrieb zur Erzeugung einer elastischen Kraftwirkung spannbar, das heißt, dass kein Spannen des Kraftspeichers mit zusätzlichen Mitteln erfolgt, sondern das Spannen des elastischen Kraftspeichers dadurch erfolgt, dass der Stellantrieb den Betätigungskörper in die der Arbeitsstellung entsprechenden Drehblockierstellung bewegt und damit zwangsläufig zum Spannen des elastischen Kraftspeichers beiträgt.

Dabei könnte der elastische Kraftspeicher außerhalb des Antriebsstrangs angeordnet sein, das heißt so, dass beispielsweise entweder der elastische Kraftspeicher ständig den Betätigungskörper mit einer Kraft beaufschlagt oder so, dass beispielsweise der gesamte Antriebsstrang durch den elastischen Kraftspeicher beaufschlagt und so verschiebbar ist, dass die der Arbeitsstellung entsprechende Drehblockierstellung ständig aufrecht erhalten wird.

Eine besonders günstige Lösung sieht vor, dass der elastische Kraftspeicher in einem Antriebsstrang für den Betätigungskörper angeordnet ist.

Der Antriebsstrang des Betätigungskörpers führt dabei beispielsweise von einem Antrieb, beispielsweise einem Antriebsmotor bis zu dem Linearantrieb für den Betätigungskörper.

Beispielsweise wäre es denkbar, in diesem Fall in dem Antriebsstrang eine Torsionswelle vorzusehen, die bei Erreichen der der Arbeitsstellung entsprechenden Drehblockierstellung des Betätigungskörpers eine elastische Kraftwirkung und einer Torsion derselben aufbaut.

Alternativ oder ergänzend sieht ein vorteilhaftes Ausführungsbeispiel vor, dass der elastische Kraftspeicher zwischen einer Spindelmutter und dem Betätigungskörper wirksam ist.

In diesem Fall kann der elastische Kraftspeicher beispielsweise durch einzelne Federn oder durch ein Tellerfederpaket realisiert sein.

Alternativ oder ergänzend zu den bisher beschriebenen Ausführungsbeispielen sieht eine weitere Lösung der eingangs genannten Aufgabe erfindungsgemäß vor, dass die Aufnahmen für den mindestens einen Drehblockierkörper im Wesentlichen ebene Anlagebereiche aufweisen, an denen die Drehblockierkörper in der Drehblockierstellung anlegbar sind.

Dabei sind die Anlagebereiche vorzugsweise so ausgebildet, dass sie sich in der Führungsrichtung über einen Nachstellbereich der Drehblockierkörper erstrecken.

Vorzugsweise sind die auf gegenüberliegenden Seiten der Drehblockierkörper liegenden Anlagebereiche so relativ zueinander ausgerichtet, dass diese einen spitzen Winkel miteinander einschließen.

Hinsichtlich der einzelnen Merkmale der Drehblockiereinrichtung wurden bislang keine näheren Angaben gemacht.

So sieht eine vorteilhafte Lösung vor, dass die Drehblockiereinrichtung nicht nur einen Drehblockierkörper sondern mindestens zwei Drehblockierkörper umfasst und dass die Drehblockierkörper durch einen gemeinsamen Betätigungskörper in der jeweiligen Führungsrichtung bewegbar sind.

Der Vorteil dieser Lösung ist darin zu sehen, dass dadurch eine einfache Möglichkeit geschaffen ist, eine Drehblockierung zu erreichen, die hohen Belastungen des Kugelhalses Stand hält.

Besonders günstig ist es dabei, wenn die Drehblockiereinrichtung mindestens drei Drehblockierkörper umfasst, da dadurch die Belastbarkeit des Kugelhalses noch besser ist.

Eine zweckmäßige Lösung sieht vor, dass die Drehblockierkörper derart relativ zum Betätigungskörper angeordnet sind, dass sich mindestens deren quer zur Schwenkachse gerichtete und auf den Betätigungskörper wirkende Reaktionskräfte zumindest zum Teil kompensieren. Bei einer derartigen Lösung besteht somit der Vorteil, dass der Betätigungskörper nicht so konzipiert sein muss, dass dieser zur Aufnahme der von den Drehblockierkörper auf diesen wirkenden Reaktionskräfte stabil gelagert sein muss, sondern sehr einfach gelagert werden kann, wenn sich die von den Drehblockierkörpern auf den Betätigungskörper wirkenden Reaktionskräfte zumindest zum Teil aufheben.

Noch vorteilhafter ist es, wenn die Drehblockierkörper relativ zum Betätigungskörper derart angeordnet sind, dass sich mindestens deren quer zur Schwenkachse gerichteten und auf den Betätigungskörper wirkenden Reaktionskräfte im Wesentlichen aufheben.

Grundsätzlich können die Drehblockierkörper relativ zum Betätigungskörper in beliebiger Weise angeordnet sein. Ein Ausführungsbeispiel sieht vor, dass die Drehblockierkörper um den Betätigungskörper herum angeordnet sind. Mit einer derartigen Lösung ist einerseits eine raumsparende Anordnung der Drehblockierkörper möglich und andererseits in einfacher Weise eine zumindest teilweise Kompensation der auf den Betätigungskörper wirkenden Reaktionskräfte realisierbar.

Dabei ist es günstig, wenn die Drehblockierkörper im Wesentlichen symmetrisch zu einer senkrecht zur Schwenkachse verlaufenden Ebene angeordnet sind.

Um eine möglichst spielfreie Drehfixierung des Schwenklagerkörpers zu erreichen, ist vorzugsweise vorgesehen, dass mindestens zwei der Drehblockierkörper mit den für diese vorgesehenen Aufnahmen derart zusammenwirken, dass diese einander entgegengesetzt wirkende Drehmomente auf den Schwenklagerkörper erzeugen.

Aufgrund dieser zwei entgegengesetzt zueinander wirkenden Drehmomente besteht die Möglichkeit, den Schwenklagerkörper spielfrei durch die Schwenklagereinheit zu fixieren.

Hinsichtlich der Führung der Drehblockierkörper wurden bislang keine näheren Angaben gemacht, insbesondere nicht, wie die Drehblockierkörper ihrerseits in der Führungsrichtung geführt sein sollen.

Beispielsweise wäre es denkbar, den mindestens einen Drehblockierkörper durch eine Führungsaufnahme in dem Schwenklagerkörper zu führen und stationäre Aufnahmen vorzusehen, mit denen der jeweils eine Drehblockierkörper in Eingriff oder außer Eingriff bringbar ist.

Erfindungsgemäß ist vorgesehen, dass der Drehblockierkörper durch einen sich in radialer Richtung an den Schwenklagerkörper anschließenden Führungskörper geführt ist.

Vorzugsweise ist dabei der Führungskörper so ausgebildet, dass er eine Führungshülse mit einer Führungsaufnahme für den jeweiligen Drehblockierkörper aufweist.

Ein derartiger Führungskörper lässt sich insbesondere vorteilhaft auch dazu einsetzen, dass mit dem Führungskörper eine Führung des Betätigungskörpers verbunden ist, so dass dadurch der Betätigungskörper in einfacher Weise und günstig gelagert werden kann.

Ferner ist der Führungskörper erfindungsgemäß so angeordnet, dass er Teil der fahrzeugfest angeordneten Schwenklagereinheit ist.

Hinsichtlich der Anordnung des Führungskörpers, des Schwenklagerkörpers und des Betätigungskörpers wurden keine weiteren Angaben gemacht. So wäre es denkbar, dass der Betätigungskörper den Führungskörper umschließt und der Schwenklagerkörper vom Führungskörper umschlossen ist, das heißt in den Führungskörper eingreift.

Die erfindungsgemäße Lösung sieht ferner vor, dass der Betätigungskörper von dem Führungskörper umschlossen ist und der Schwenklagerkörper den Führungskörper umgreift und dass der Schwenklagerkörper einen die Schwenklagereinheit außenliegend umschließenden Außenkörper bildet, der gegenüber der Schwenklagereinheit in Richtung der Schwenkachse unverschiebbar angeordnet ist.

Vorzugsweise ist dabei das erste Ende des Kugelhalses an einem derartigen Außenkörper angesetzt.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Draufsicht auf ein erstes Ausführungsbeispiel einer erfindungsgemäßen Anhängekupplung mit Blick in Fahrtrichtung auf die an einem Fahrzeugheck montierte Anhängekupplung, wobei die Anhängekupplung in ihrer Arbeitsstellung steht;
- Fig. 2: eine Ansicht entsprechend Fig. 1 der in der Ruhestellung stehenden Anhängekupplung;
- Fig. 3: eine Ansicht in Richtung des Pfeils X in Fig. 1;
- Fig. 4: einen Teilschnitt längs einer durch die Schwenkachse sowie einen der Drehblockierkörper hindurchverlaufenden Schnittebene in einer Blockierstellung der Drehblockierelemente und einer aktiven Stellung eines Betätigungskörpers;
- Fig. 5: einen Schnitt längs Linie 5-5 in Fig. 4;
- Fig. 6: eine Darstellung ähnlich Fig. 4 bei in Lösestellung stehendem Drehblockierkörper und in inaktiver Stellung stehendem Betätigungskörper;
- Fig. 7: einen Schnitt entsprechend Fig. 5 bei der Stellung der Drehblockierkörper und des Betätigungskörpers in Fig. 6;
- Fig. 8: einen vergrößerten Schnitt entsprechend Fig. 5 bei drehfester Blockierung des Schwenklagerkörpers mittels der Drehblockierkörper;
- Fig. 9: eine ausschnittsweise vergrößerte Darstellung des Drehblockierelements 54b;
- Fig. 10: eine ausschnittsweise vergrößerte Darstellung des Drehblockierelements 54c;
- Fig. 11: eine ausschnittsweise vergrößerte Darstellung des Drehblockierelements 54a;
- Fig. 12: einen Teilschnitt ähnlich Fig. 4 durch ein zweites Ausführungsbeispiel einer erfindungsgemäßen Anhängekupplung bei in einer ersten Drehblockierstellung stehendem Betätigungskörper und Drehblockierkörper;
- Fig. 13: einen Teilschnitt ähnlich Fig. 6 durch das zweite Ausführungsbeispiel der erfindungsgemäßen Anhängekupplung bei in Freilaufstellung stehendem Betätigungskörper und Drehblockierkörper vor einer Schwenkbewegung des Schwenklagerkörpers;
- Fig. 14: einen Teilschnitt ähnlich Fig. 13 durch das zweite Ausführungsbeispiel der erfindungsgemäßen Anhängekupplung nach einer Schwenkbewegung des Schwenklagerkörpers von einer Arbeitsstellung in eine Ruhestellung;
- Fig. 15: einen Teilschnitt ähnlich Fig. 4 durch das zweite Ausführungsbeispiel der erfindungsgemäßen Anhängekupplung bei in einer zweiten Drehblockierstellung stehendem Betätigungskörper und Drehblockierkörper;
- Fig. 16: eine vergrößerte Schnittdarstellung im Bereich einer Drehblockiervorrichtung und von Hemmvorrichtungen entsprechend dem Zustand in Fig. 12;
- Fig. 17: eine Schnittdarstellung ähnlich Fig. 16 entsprechend dem Zustand in Fig. 13;
- Fig. 18: eine Schnittdarstellung ähnlich Fig. 16 entsprechend dem Zustand in Fig. 14;
- Fig. 19: eine Schnittdarstellung ähnlich Fig. 16 entsprechend dem Zustand in Fig. 15;
- Fig. 20: einen Teilschnitt ähnlich Fig. 4 durch ein drittes Ausführungsbeispiel einer erfindungsgemäßen Anhängekupplung bei in einer ersten Drehblockierstellung stehendem Betätigungskörper und Drehblockierkörper mit einer einzigen Hemmvorrichtung;
- Fig. 21: einen Teilschnitt ähnlich Fig. 6 durch das dritte Ausführungsbeispiel der erfindungsgemäßen Anhängekupplung bei in Freilauf stehendem Betätigungskörper und Drehblockierkörper vor einer Schwenkbewegung des Schwenklagerkörpers bei Wirkungseintritt der Hemmvorrichtung;
- Fig. 22: einen Teilschnitt durch das dritte Ausführungsbeispiel der erfindungsgemäßen Anhängekupplung im Verlauf der Schwenkbewegung bei in Freilaufstellung stehendem Betätigungskörper und Drehblockierkörper und voll wirksamer Hemmvorrichtung;
- Fig. 23: einen Teilschnitt ähnlich Fig. 13 durch das dritte Ausführungsbeispiel nach einer Schwenkbewegung des Schwenklagerkörpers von einer Arbeitsstellung in eine Ruhestellung;
- Fig. 24: einen Schnitt ähnlich Fig. 4 durch das dritte Ausführungsbeispiel der erfindungsgemäßen Anhängekupplung bei in einer zweiten Drehblockierstellung stehendem Betätigungskörper und Drehblockierkörper;
- Fig. 25: einen Schnitt ähnlich Fig. 20 durch das dritte Ausführungsbeispiel der erfindungsgemäßen Anhängekupplung im Bereich einer Sicherungsvorrichtung;
- Fig. 26: einen Schnitt durch das dritte Ausführungsbeispiel im Bereich der Sicherungsvorrichtung gemäß Fig. 21;
- Fig. 27: einen Schnitt durch das dritte Ausführungsbeispiel im Bereich der Sicherungsvorrichtung gemäß Fig. 22;
- Fig. 28: einen Schnitt durch das dritte Ausführungsbeispiel im Bereich der Sicherungsvorrichtung gemäß Fig. 23;
- Fig. 29: einen Schnitt durch das dritte Ausführungsbeispiel im Bereich der Sicherungsvorrichtung gemäß Fig. 24;
- Fig. 30: einen Schnitt ähnlich Fig. 4 durch ein viertes Ausführungsbeispiel einer erfindungsgemäßen Anhängekupplung bei in einer ersten Drehblockierstellung stehendem Betätigungskörper und Drehblockierkörper und
- Fig. 31: einen Schnitt ähnlich Fig. 5 durch ein fünftes Ausführungsbeispiel einer erfindungsgemäßen Anhängekupplung allerdings ohne Darstellung des Führungskörpers und des Betätigungskörpers

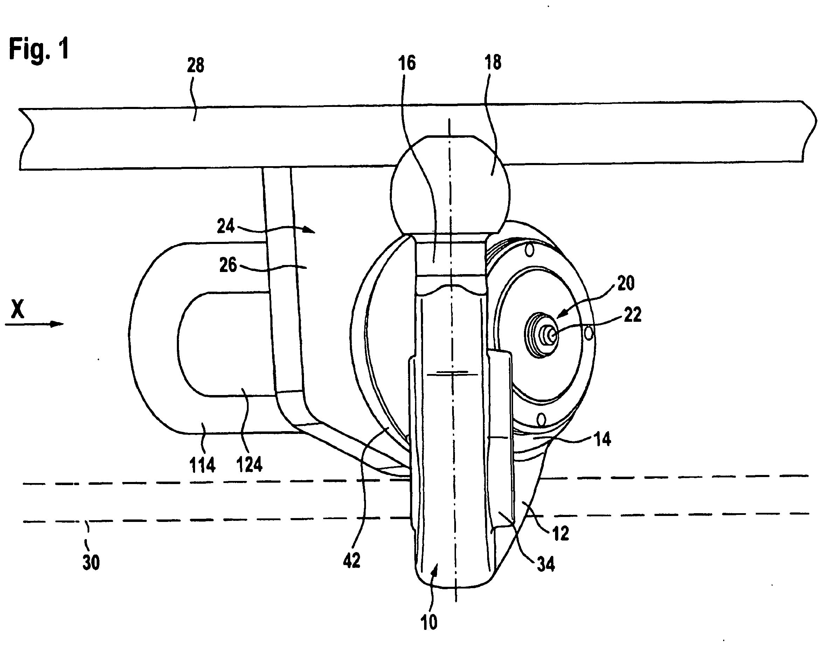

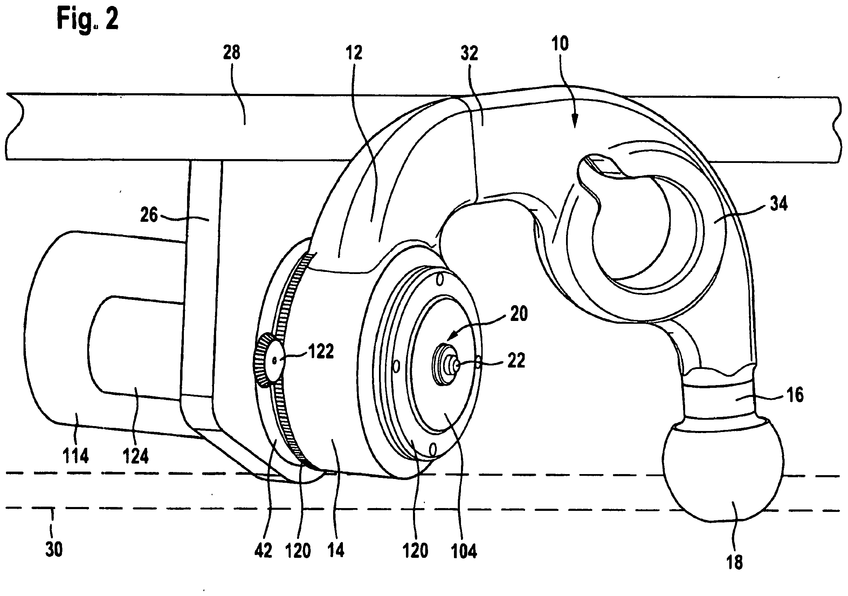

Ein erstes Ausführungsbeispiel einer erfindungsgemäßen Anhängekupplung, dargestellt in Fig. 1 in einer Arbeitsstellung A und in Fig. 2 in einer Ruhestellung R, umfasst einen als Ganzes mit 10 bezeichneten Kugelhals, welcher mit einem ersten Ende 12 an einem Schwenklagerkörper 14 gehalten ist und an einem zweiten Ende 16 eine als Ganzes mit 18 bezeichnete Kupplungskugel trägt, an welcher eine Kupplungskugelaufnahme eines Anhängers fixierbar ist.

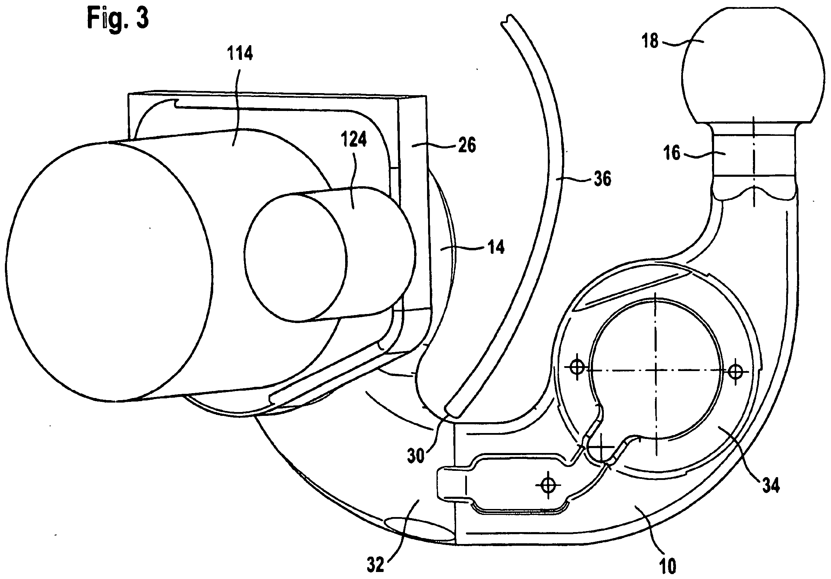

Der Schwenklagerkörper 14 ist durch eine als Ganzes mit 20 bezeichnete Schwenklagereinheit um eine Schwenkachse 22 relativ zu einem fahrzeugfesten Träger 24 schwenkbar gelagert, wobei der Träger 24 vorzugsweise eine die Schwenklagereinheit 20 haltende Tragplatte 26 aufweist, welche sich vorzugsweise in einer zur Schwenkachse 22 senkrechten Ebene erstreckt und einen fahrzeugfesten Querträger 28, welcher in bekannter Weise heckseitig einer Fahrzeugkarosserie befestigbar ist, und zwar so, dass die Schwenklagereinheit 20 und der Träger 24 auf einer einer Fahrbahnoberfläche abgewandten Seite einer Unterkante 30 einer Stoßfängereinheit 36 liegen, und durch die Stoßfängereinheit 36 abgedeckt sind (Fig. 3).

In der in Fig. 1 dargestellten Arbeitsstellung untergreift der Kugelhals 10 mit einem sich an das erste Ende 12 anschließenden Abschnitt 32 die Unterkante 30 der Stoßfängereinheit 36, so dass das zweite Ende 16 und die Kupplungskugel 18 mitsamt einer Steckdosenaufnahme 34 auf einer der Fahrzeugkarosserie abgewandten Seite der hinteren Stoßfängereinheit 36 stehen, während in der Ruhestellung sowohl die Schwenklagereinheit 20 als auch der gesamte Kugelhals 10 mitsamt der Kupplungskugel 18 von der hinteren Stoßfängereinheit 36 gegen Sicht von hinten abgedeckt sind.

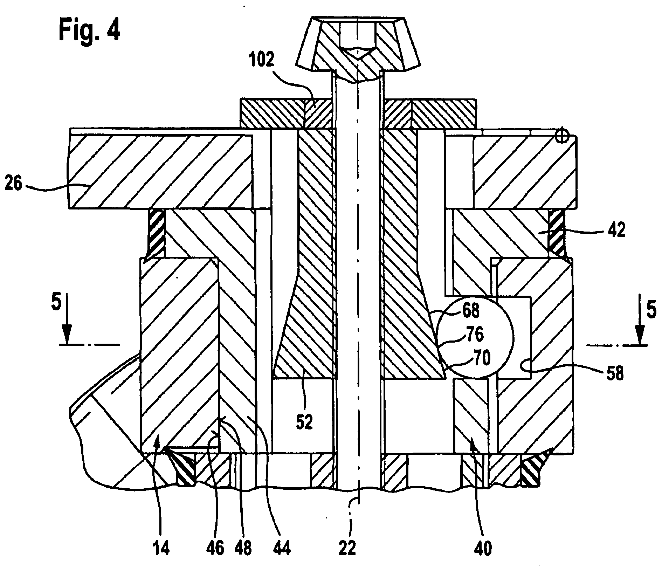

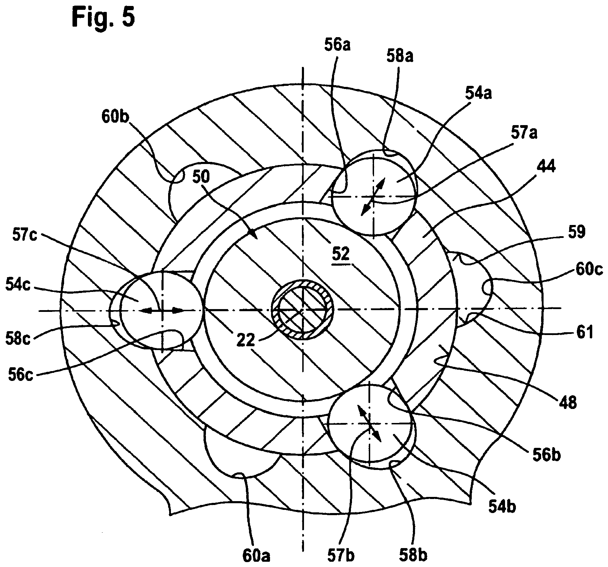

Die Schwenklagereinheit 20 umfasst, wie in Fig. 4 und 5 dargestellt, einen Führungskörper 40, welcher mit einem Flansch 42 fest mit der Tragplatte 26 verbunden ist und eine sich ausgehend von dem Flansch 42 von der Tragplatte 26 weg erstreckende Führungshülse 44, auf welcher der Schwenklagerkörper 14 drehbar gelagert ist. Hierzu umfasst die Führungshülse 44 eine zylindrische Außenmantelfläche 46, auf welcher der Schwenklagerkörper 14 mit einer zylindrischen Innenfläche 48 aufliegt und dadurch um die Schwenkachse 22 eine Drehführung erfährt, so dass der Schwenklagerkörper 14 derart relativ zum Führungskörper 40 drehbar ist, dass der Kugelhals 10 von der Arbeitsstellung A in die Ruhestellung R und umgekehrt verschwenkbar ist.

Der Führungskörper 40 bildet somit durch seine feste Verbindung mit der Trägerplatte 26 und dem Träger 24 die fahrzeugfeste Drehlagerung für den Schwenklagerkörper 14.

Zur Fixierung des Schwenklagerkörpers 14 in der Arbeitsstellung A und der Ruhestellung R ist die Schwenklagereinheit 20 mit einer als Ganzes mit 50 bezeichneten Drehblockiereinrichtung versehen, welche einen Betätigungskörper 52, mehrere durch den Betätigungskörper 52 beaufschlagbare Drehblockierkörper 54, welche in Führungsaufnahmen 56 der Führungshülse 44 in einer im wesentlichen radial zur Schwenkachse 22 verlaufenden Führungsrichtung 57 bewegbar geführt sind, sowie sich ausgehend von der Innenfläche 48 des Schwenklagerkörpers 14 in diesen hineinerstreckende erste Aufnahmen 58 und zweite Aufnahmen 60, mit denen die Drehblockierkörper 54 in der Arbeitsstellung A bzw. in der Ruhestellung R in Eingriff bringbar sind, wobei die Aufnahmen 58, 60 in radialer Richtung zur Schwenkachse 22 zunehmend einen geringeren Abstand voneinander aufweisende Wandflächen 59, 61 haben.

Umfasst beispielsweise die Drehblockiereinrichtung 50, wie im Zusammenhang mit Fig. 4 und Fig. 5 beim ersten Ausführungsbeispiel dargestellt, einen Satz von drei Drehblockierkörpern 54a, 54b und 54c, so weist die Führungshülse 44 einen Satz von drei Führungsaufnahmen 56a, 56b und 56c auf, in welchen die Drehblockierkörper 54a, 54b und 54c in der im Wesentlichen radial zur Schwenkachse 22 verlaufenden Führungsrichtung 57 verschiebbar geführt sind, und der Schwenklagerkörper 14 ist mit einem Satz von ersten Aufnahmen 58a, 58b und 58c versehen, mit welchen die Drehblockierkörper 54a, 54b und 54c in der Arbeitsstellung A in Eingriff bringbar sind und mit einem Satz von zweiten Aufnahmen 60a, 60b und 60c versehen, mit welchen die Drehblockierkörper 54a, 54b und 54c in der Ruhestellung R in Eingriff bringbar sind.

Zum geeigneten Bewegen und Positionieren der Drehblockierkörper 54 in der Führungsrichtung 57 ist der Betätigungskörper 52 mit Rückzugsaufnahmen 62 versehen, die im einfachsten Fall durch eine gegenüber dem Führungskörper 40 radial zur Schwenkachse 22 zurückgesetzte zylindrische Fläche 63 des Betätigungskörpers gebildet ist und mit sich an die Rückzugsaufnahmen 62 in axialer Richtung 64 anschließenden Druckflächen 66, welche im einfachsten Fall als eine sich ausgehend von der Zylinderfläche 63 radial zur Schwenkachse 22 konisch erweiternde Konusfläche 67 gebildet sind. Die Drehblockierkörper 54 liegen in ihrer Freilaufstellung oder Lösestellung im Bereich der Rückzugsaufnahmen 62, das heißt der Zylinderfläche 63 des Betätigungskörpers 52 auf und sind damit in radialer Richtung zur Schwenkachse 22 so weit in den Führungskörper 40 hineinbewegt, dass sie nicht mehr über die Außenmantelfläche 46 der Führungshülse 44 überstehen.

Mittels der Druckflächen 66 sind die Drehblockierkörper 54 mit zunehmender Verschiebung des Betätigungskörpers 52 in axialer Richtung 64 radial zur Führungshülse 44 so weit nach außen bewegbar, bis sie in einer ersten Drehblockierstellung stehen, in welcher die Drehblockierkörper 54 in ihrer Führungsrichtung 57 so weit nach Außen geschoben sind, dass sie entweder in die Aufnahmen 58 oder die Aufnahmen 60 des Schwenklagerkörpers 14 eingreifen und somit diesen relativ zur Führungshülse 44 festlegen.

Bei den beschriebenen Ausführungsbeispielen sind der Einfachheit halber die Druckflächen 66 als Konusflächen 67 dargestellt. Anstelle eines Konus kann jedoch jeder sich zunehmen und kontinuierlich radial zur Schwenkachse 22 erweiternde Körper vorgesehen sein, welcher in der Lage ist, beim Verschieben des Betätigungskörpers 52 in der axialen Richtung 64 die Drehblockierkörper 54 in ihren Führungsrichtungen 57 zu bewegen.

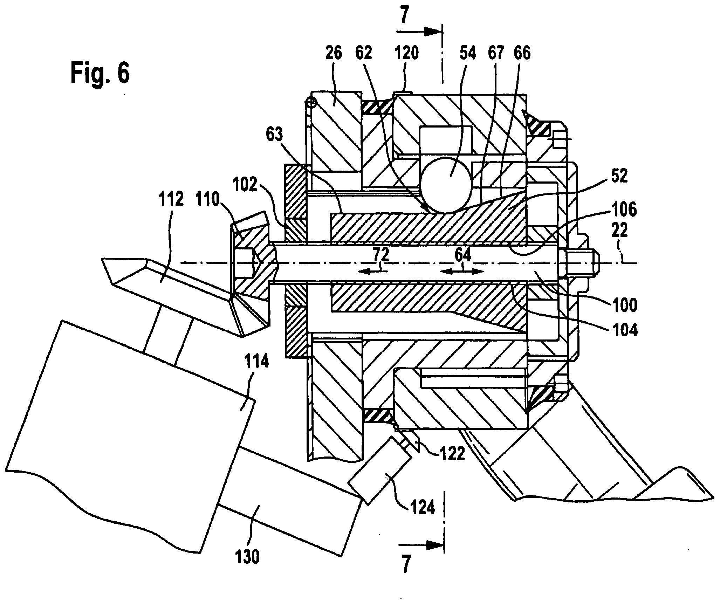

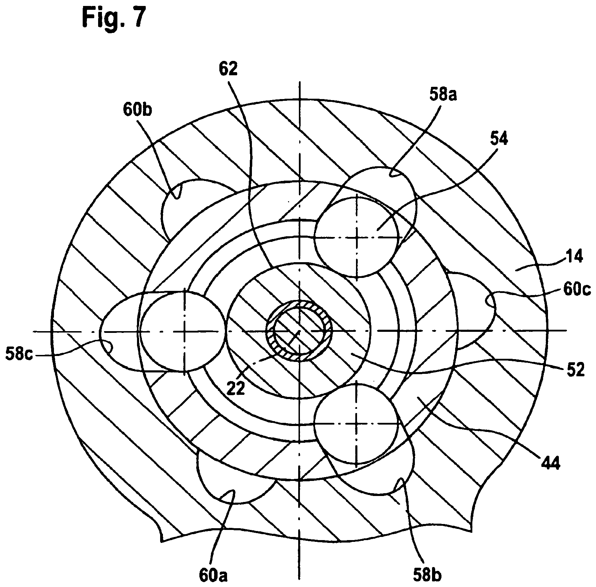

Um die Drehblockierkörper 54 entweder in ihrer Drehblockierstellung durch Beaufschlagen derselben mit den Druckflächen 66 zu halten oder in der Freilaufstellung auf der Rückzugsaufnahme 62 aufliegen zu lassen, ist der Betätigungskörper 52 in der axialen Richtung 64 parallel zur Schwenkachse 22, insbesondere koaxial zu dieser, verschiebbar, und zwar so, dass entweder die Rückzugsaufnahme 62 dem jeweiligen Drehblockierkörper 54 zugewandt ist und diesem, wie in Fig. 6 und 7 dargestellt, in seiner aktiven Stellung die Möglichkeit gibt, in die Führungshülse 44 in Richtung der Rückzugsaufnahme 62 in radialer Richtung zur Schwenkachse 22 hin einzutauchen und den jeweiligen Drehblockierkörpern 54 die Möglichkeit zu eröffnen, die ersten Aufnahmen 58 oder die zweiten Aufnahmen 60 hinsichtlich einer Drehung mitsamt dem Schwenklagerkörper 14 um die Schwenkachse 22 frei zu geben, so dass der Schwenklagerkörper 14 mit dem Kugelhals 10 relativ zur Führungshülse 44 ungehindert und frei drehbar ist, wie in Fig. 6 und 7 dargestellt, wobei in diesem Fall die Drehblockierkörper 54 sich nicht über die Außenmantelfläche 46 der Führungshülse 44 hinaus erstrecken.

Eine Verschiebung des Betätigungskörpers 52 bei auf der jeweiligen Rückzugsaufnahme 62 sitzendem Drehblockierkörper 54 in der Richtung 72 auf die Tragplatte 26 zu bewirkt, dass der jeweilige Drehblockierkörper 54 aus der Rückzugsaufnahme 62 heraus bewegt wird und durch die Druckfläche 66 in seiner Führungsrichtung 57 radial zur Schwenkachse 22 nach außen bewegt wird, somit seine erste Drehblockierstellung erreicht und dabei entweder in die jeweilige erste Aufnahme 58 oder in die jeweilige zweite Aufnahme 60 eintaucht und damit die freie Drehbarkeit des Schwenklagerkörpers 14 unterbindet.

Der Betätigungskörper 52 lässt sich in der Richtung 72 in der axialen Richtung 64 so bewegen, dass die Drehblockierkörper 54 zunächst auf Anfangsbereichen 68 der Druckflächen 66 wirken und dann immer weiter radial gegenüber der Schwenkachse 22 außenliegende Bereiche der jeweiligen Druckflächen 66 auf die Drehblockierkörper 54 wirken und diese somit zunehmend, beispielsweise in der Arbeitsstellung A des Kugelhalses 10, in die ersten Aufnahmen 58a, 58b und 58c hineindrücken, wie dies in Fig. 4 und 5 dargestellt ist, um somit eine im Wesentlichen spielfreie Fixierung des Schwenklagerkörpers 14 relativ zum Führungskörper 40, in diesem Fall zur Führungshülse 44, zu erreichen.

In dieser Drehblockierstellung der Drehblockierkörper 54 steht der Betätigungskörper 52 in seiner aktiven Stellung so, dass die Drehblockierkörper 54, wie in Fig. 4 und 5 dargestellt, ungefähr auf Zwischenbereichen 76 aufliegen, die zwischen den Anfangsbereichen 68 und den größten radialen Abstand zur Schwenkachse 22 aufweisenden Endbereichen 70 der Druckflächen 66 liegen.

Eine spielfreie Verriegelung des Schwenklagerkörpers 14 durch die in ihrer Drehblockierstellung stehenden Drehblockierkörper 54 lässt sich besonders günstig dann erreichen, wenn der Drehblockierkörper 54 und die Aufnahmen 58 und 60 so gestaltet sind, dass bei zunehmendem Eintauchen eines der Drehblockierkörper 54 in eine der Aufnahmen 58 oder 60 und Anliegen der Drehblockierkörper 54 an einer Seite der Aufnahmen 58 und 60 jeder der Drehblockierkörper 54 mit der wechselwirkenden Aufnahme 58 oder 60 eine Verdrehung des Schwenklagerkörpers 14 bewirkt, wobei insgesamt der Satz von Drehblockierkörpern 54a bis 54c zur spielfreien Fixierung des Schwenklagerkörpers 14 mit in entgegengesetzten Richtungen wirkenden Drehmomenten 90, 92 auf die Gesamtheit der Aufnahmen 58 oder 60 einwirkt.

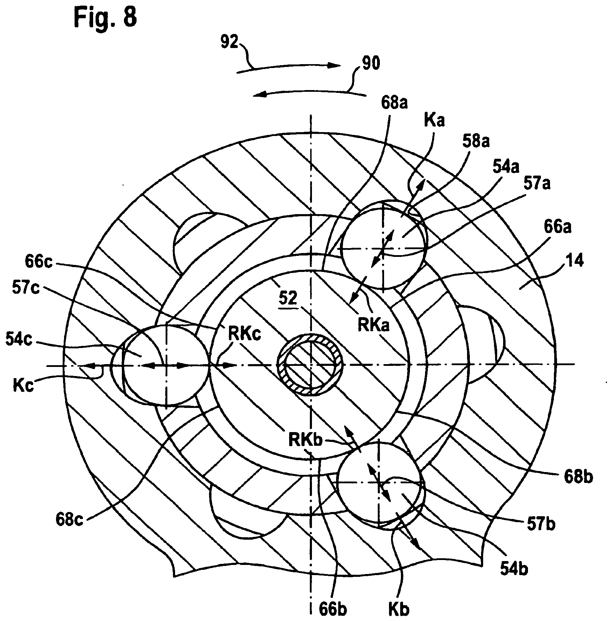

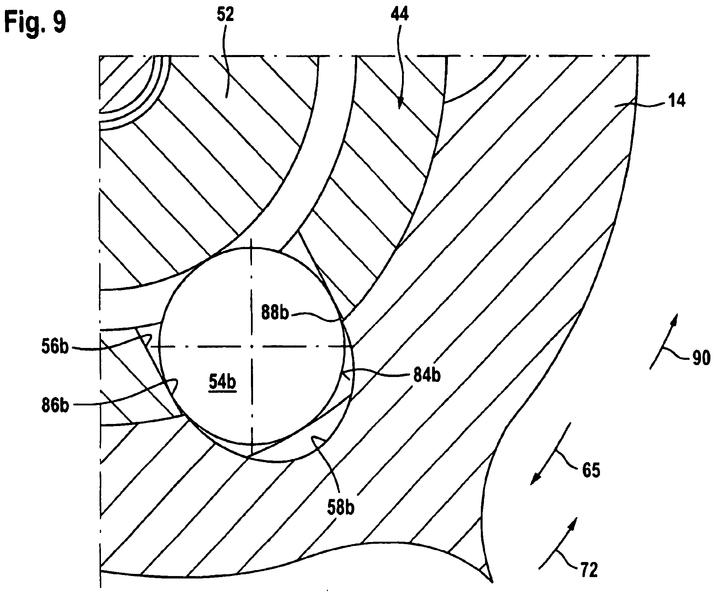

Wie beispielsweise in Fig. 8 bis 11 dargestellt, liegt der Drehblockierkörper 54b mit seiner Mantelfläche 84b nur auf einer Seite 86b der Führungsaufnahme 56b an, beispielsweise der in Umlaufrichtung 65 liegenden Seite, und stützt sich mit einem gegenüberliegenden Bereich seiner Mantelfläche 84b auf einer entgegengesetzt zur Umlaufrichtung 65 liegenden Seite 88b der Aufnahme 58b ab, wobei eine zunehmende Bewegung des Drehblockierkörpers 54 in radialer Richtung zur Schwenkachse 22 zu einem entgegengesetzt zur Umlaufrichtung 65 wirkenden Drehmoment 90 führt, welches auf den Schwenklagerkörper 14 wirkt.

Ferner liegt der Drehblockierkörper 54c mit seiner Mantelfläche 84c an einer entgegengesetzt zur Umlaufrichtung 65 liegenden Seite 86c der Führungsaufnahme 56c an und wirkt mit einem gegenüberliegenden Bereich der Mantelfläche 84c auf eine Seite 89c der ersten Aufnahme 58c, wodurch ein in Umlaufrichtung 65 wirkendes Drehmoment 92 entsteht, welches auf den Schwenklagerkörper 14 wirkt.

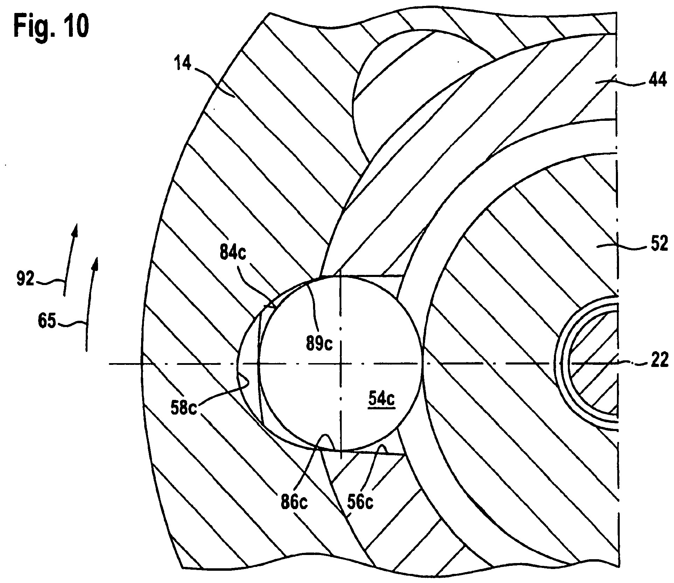

Somit wirken die durch die Drehblockierkörper 54b und 54c erzeugten Drehmomente 90 und 92 wie in Fig. 10 dargestellt, entgegengesetzt zueinander und erlauben eine spielfreie Festlegung des Schwenklagerkörpers 14 relativ zum Führungskörper 40, insbesondere zur Führungshülse 44 derselben, da durch die jeweils einseitige Anlage der Drehblockierkörper 54 einerseits in der Führungsaufnahme 56 und andererseits in der ersten Aufnahme 58 das Spiel zwischen der Führungsaufnahme 56 und dem Drehblockierkörper 54 sowie der ersten Aufnahme 58 im Bereich beider Drehblockierkörper 54b und 54c eliminiert wird.

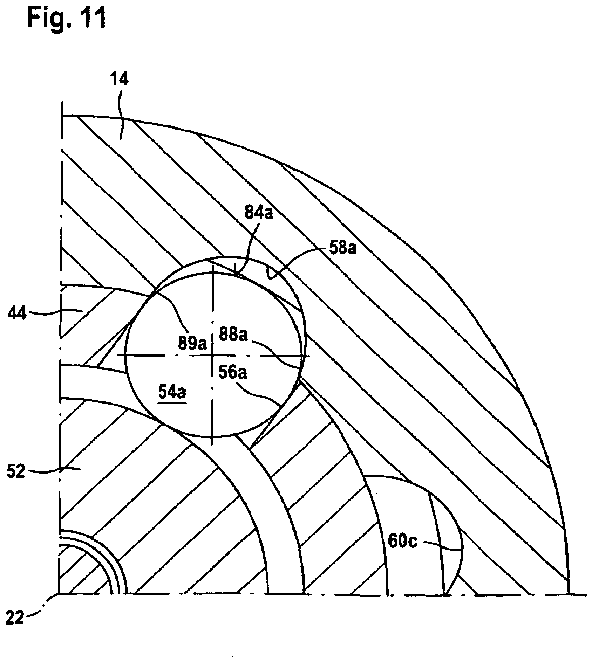

Ferner ist, wie in Fig. 11 dargestellt, beim Drehblockierkörper 54a vorgesehen, dass dieser mit seiner Mantelfläche 84a sowohl an der in Umlaufrichtung 65 liegenden Seite 88a als auch an der entgegengesetzt zu dieser Seite liegenden Seite 89a der ersten Aufnahme 58a anliegt, und somit je nach Fertigungstoleranz im Bereich der Führungsaufnahme 56a und der entsprechenden Aufnahme 58a und je nach Belastung des Kugelhalses 10 im Anhängerbetrieb in der Regel zu einem der beiden Drehmomente 90 und 92 beiträgt und somit in der Regel dazu dient, zusätzlich zu dem aufgrund der Belastung des Kugelhalses 10 belasteten Drehblockierkörper 54b oder 54c noch Last aufzunehmen, es kann aber auch ein Zustand auftreten, in dem der Drehblockierkörper 54a zu keinem der beiden Drehmomente 90 und 92 beitragen kann.

Um dem Betätigungskörper 52 die Möglichkeit zu eröffnen, jeweils jeden der drei Drehblockierkörper 54 optimal zu beaufschlagen, ist vorgesehen, dass in der aktiven Stellung eine Zentrierung des Betätigungskörpers 52 entsprechend der Lage der Drehblockierkörper 54 erfolgt, so dass sich der Betätigungskörper 52 relativ zur Schwenkachse 22 bewegen und entsprechend der durch Fertigungstoleranzen bedingten Lage der Drehblockierkörper 54 innerhalb des Führungskörpers 40 selbstzentrieren kann, wobei die Selbstzentrierung des Betätigungskörpers 52 geringfügig von einer koaxialen Anordnung zur geometrischen Schwenkachse 22 abweichen kann.

Aufgrund der Selbstzentrierung wirken die Drehblockierkörper 54a, 54b und 54c in der jeweiligen Führungsrichtung 57a, 57b und 57c mit ungefähr gleich großen Kräften Ka, Kb und Kc auf die Aufnahmen 58a, 58b und 58c oder 60a, 60b und 60c, so dass auch die auf den Betätigungskörper 52 wirkenden Reaktionskräfte RKa, RKb und RKc ungefähr gleich groß sind.

Bei dem dargestellten Ausführungsbeispiel der erfindungsgemäßen Lösung sind die Drehblockierkörper 54 in den Führungsaufnahmen 56 in gleichen Winkelabständen um die Schwenkachse 22 herum angeordnet, so dass die durch die Selbstzentrierung ungefähr gleich großen Reaktionskräfte RKa, RKb, RKc auf einen der Drehblockierkörper 54a, 54b, 54c sich zu gleichen Teilen auf die anderen Drehblockierkörper 54b und 54c, 54a und 54c sowie 54a und 54b auswirken und sich somit insgesamt aufheben, so dass der Betätigungskörper 52 im Kräftegleichgewicht steht und keine zusätzliche Abstützung benötigt.

Im dargestellten Ausführungsbeispiel sind die Drehblockierkörper 54, wie in den Fig. 4, 6 und 8 dargestellt, als Kugeln ausgebildet. Es besteht aber auch die Möglichkeit, die Drehblockierkörper beispielsweise als Rollen auszubilden.

Zum Bewegen des Betätigungskörpers 52 in der axialen Richtung 64 sitzt dieser auf einer als Ganzes mit 100 bezeichneten Gewindespindel, die an der Tragplatte 26 beispielsweise über ein Axial-/Radiallager 102 in der axialen Richtung 64 unverschieblich gelagert ist.

Diese Gewindespindel 100 greift mit einem Außengewinde 104 in ein Innengewinde 106 des Betätigungskörpers 54 ein, der somit gleichzeitig eine Spindelmutter zu der Gewindespindel 100 darstellt. Es besteht die Möglichkeit, die Selbstzentrierung des Betätigungskörpers 52 durch ausreichend großes Spiel zwischen dem Außengewinde 104 und dem Innengewinde 106 zu erreichen.

Durch Drehen der Gewindespindel 100 lässt sich somit der Betätigungskörper 52 in der axialen Richtung 64 verschieben.

Vorzugsweise ist das Axial-/Radiallager 102 so ausgebildet, dass es die Gewindespindel 100 nicht streng koaxial zur Schwenkachse 22 führt, sondern eine Ausweichbewegung der Gewindespindel 100 quer zur Schwenkachse 22 zulässt, um die bereits beschriebene Selbstzentrierung des Betätigungskörpers 52 in der Führungshülse 44 zu ermöglichen.

Ein Antrieb der Gewindespindel 100 erfolgt über ein auf einer dem Betätigungskörper 52 gegenüberliegenden Seite der Tragplatte 26 sitzendes Antriebsrad 110, welches mit einem Antriebsrad 112 eines Verriegelungsantriebs 114 in Eingriff steht, wobei der Verriegelungsantrieb 114 beispielsweise als Elektromotor mit einem Untersetzungsgetriebe ausgebildet ist.

Zum Verschwenken des Schwenklagerkörpers 14 ist dieser beispielsweise mit einer externen Verzahnung 120 versehen, in welche ein Antriebsrad 122 eines Schwenkantriebs 124 eingreift. Durch eine Steuerung 130 lassen sich nun das Verriegeln und Verschwenken des Schwenklagerkörpers 14 steuern, nämlich einerseits dadurch, dass der Schwenkantrieb 124 den Schwenklagerkörper 14 zwischen der der Arbeitsstellung A und der Ruhestellung R entsprechenden Schwenkstellung verschwenkt und dann bei Erreichen der jeweiligen Schwenkstellung der Verriegelungsantrieb 114 durch Verschieben des Betätigungskörpers 52 zwischen seiner Freilaufstellung und seiner Drehblockierstellung den Schwenklagerkörper 14 relativ zum Führungskörper 40 durch Verschieben der Drehblockierkörper 54 entweder entriegelt bzw. verriegelt, wie dies bereits im Detail beschrieben wurde.

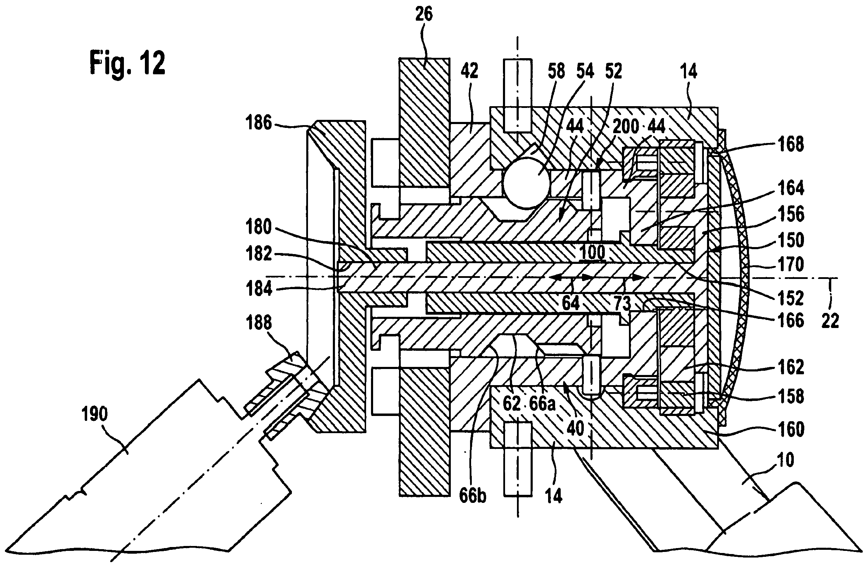

Bei einem zweiten Ausführungsbeispiel einer erfindungsgemäßen Anhängekupplung, dargestellt in Fig. 12, sind diejenigen Merkmale, die mit denen des ersten Ausführungsbeispiels identisch sind, mit denselben Bezugszeichen versehen, so dass auf die Beschreibung derselben vollinhaltlich Bezug genommen werden kann.

Im Gegensatz zum ersten Ausführungsbeispiel ist bei dem zweiten Ausführungsbeispiel der Betätigungskörper 52 beiderseits der Rückzugaufnahme 62 mit sich radial zur Schwenkachse 22 beispielsweise konisch nach außen erweiternden Druckflächen 66a und 66b versehen, mit denen die Drehblockierkörper 54 radial nach außen bewegbar sind. Somit sind durch die Rückzugsaufnahme 62 eine Freilaufstellung durch die Druckflächen 66a eine erste Drehblockierstellung und durch die Druckflächen 66b eine zweite Drehblockierstellung realisierbar.

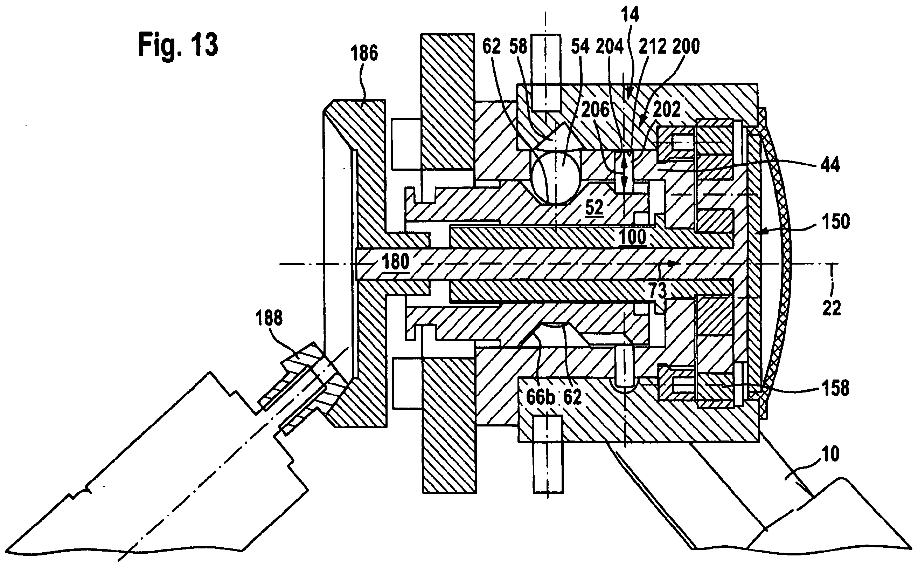

Es besteht die Möglichkeit, ausgehend von der ersten Drehblockierstellung, dargestellt in Fig. 12, in welcher die Drehblockierkörper 54 durch die Druckflächen 66 radial nach außen in die Aufnahmen 58 gedrückt sind, durch Verschieben des Betätigungskörpers 52 in der axialen Richtung 64, und zwar in einer Richtung 73 von der Tragplatte 26 weg, den durch die erste Drehblockierstellung verriegelten Zustand des Schwenklagerkörpers 14 zu lösen, nämlich dadurch, dass, wie in Fig. 13 dargestellt, die Drehblockierkörper 54 die Möglichkeit haben, in die Rückzugsaufnahmen 62 und somit in die Freilaufstellung überzugehen, in der sie sich so weit in die Führungshülse 44 hineinbewegen, dass der Schwenklagerkörper 14 frei auf der Führungshülse 44 drehbar ist.

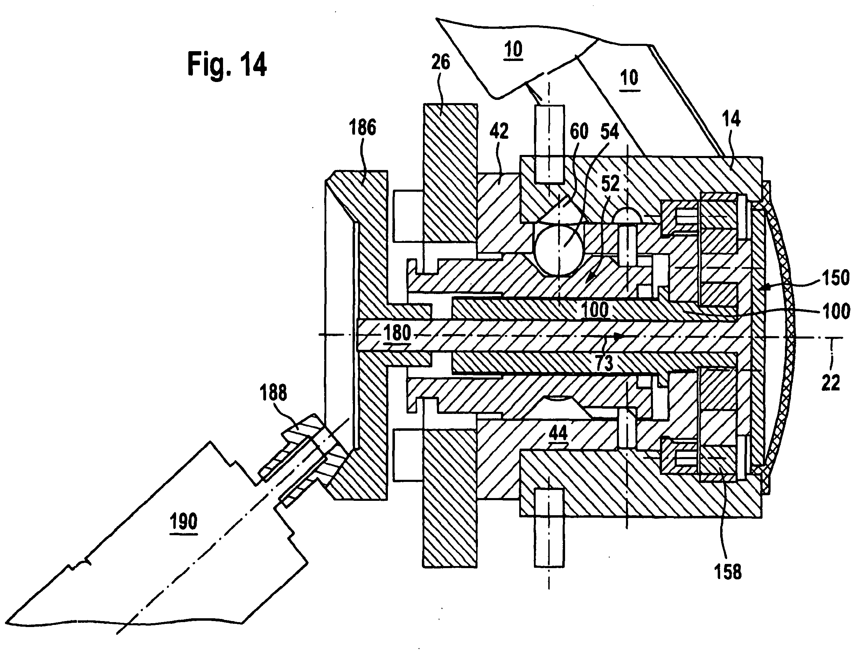

In dieser entriegelnden Stellung des Schwenklagerkörpers 14 kann dieser frei um die Schwenkachse 22 verschwenkt werden und es besteht die Möglichkeit, beispielsweise den Kugelhals 10 von der Arbeitsstellung A, dargestellt in Fig. 12 in die Ruhestellung R zu überführen, in welcher der Kugelhals 10 sich ungefähr auf einer der Arbeitsstellung A gegenüberliegenden Seite der Schwenkachse 22 erstreckt, wie dies in Fig. 14 dargestellt ist.

In dieser Ruhestellung R stehen dann die Aufnahmen 60 wiederum den Drehblockierkörpern 54 gegenüber und es besteht die Möglichkeit, durch weiteres Verschieben des Betätigungskörpers 52 in der Richtung 73 mittels der Druckflächen 66b die Drehblockierkörper 54 wiederum radial nach außen, in die Aufnahmen 60 hineinzubewegen und somit wiederum die bereits beschriebene, formschlüssige Verriegelung des Schwenklagerkörpers 14 zur Führungshülse 40 durch Erreichen der zweiten Drehblockierstellung zu erhalten.

Im Gegensatz zum ersten Ausführungsbeispiel erfolgt der Antrieb der Gewindespindel 100 nicht direkt über den Verriegelungsantrieb 114 sondern über ein Planetengetriebe 150, welches auf einer der Tragplatte 26 abgewandten Seite des Betätigungskörpers 52 angeordnet ist.

Das Planetengetriebe 150 umfasst ein Sonnenrad 152, welches drehfest mit der Gewindespindel 100 verbunden ist, vorzugsweise einstückig an diese angeformt ist.

Das Sonnenrad 152 wird dabei angetrieben durch Planetenräder 154, die an einem Planetenradträger 156 drehbar gelagert sind.

Die Planetenräder 154 kämmen auf ihrer radial innen liegenden Seite mit dem Sonnenrad 152 und auf ihrer radial außen liegenden Seite mit einem Hohlrad 158, das drehfest mit dem Schwenklagerkörper 14 verbunden ist.

Vorzugsweise erstreckt sich hierzu der Schwenklagerkörper 14 mit seiner der Tragplatte 26 abgewandten Seite über die Führungshülse 44 hinaus mit einem hülsenähnlichen Abschnitt 160, welcher einen Innenraum 162 umschließt, in welchem das Planetengetriebe 150 angeordnet ist.

Dabei sitzt das Hohlrad 158 des Planetengetriebes 150 unmittelbar auf einer Innenseite des hülsenähnlichen Abschnitts 160 des Schwenklagerkörpers 14 und ist drehfest mit diesem verbunden.

Der Innenraum 162 ist ferner in Richtung der Tragplatte 26 begrenzt durch eine Abschlusswand 164 des Führungskörpers 44, welche ein Axial- und Radiallager 166 zur Lagerung der Gewindespindel 100 trägt und andererseits begrenzt durch einen eine äußere Öffnung 168 des hülsenähnlichen Abschnitts 160 des Schwenklagerkörpers 14 verschließenden Deckel 170 der den Innenraum 162 auf einer der Abschlusswand 164 gegenüberliegenden Seite des Planetengetriebes 150 abschließt.

Ein Antrieb des Planetengetriebes 150 erfolgt über einen Antrieb des Planetenradträgers 156, der einstückig mit einer Antriebswelle 180 verbunden ist, die von dem Planetenradträger 156 durch eine zentrale Bohrung 182 der Gewindespindel 100 und somit koaxial durch diese hindurchgeführt ist, und dabei von dem Innenraum 162 durch die Gewindespindel 100 und somit auch zentral durch den Betätigungskörper 52 bis zu einer dem Betätigungskörper 52 gegenüberliegenden Seite der Tragplatte 26 geführt ist und an ihrem auf der dem Betätigungskörper 52 gegenüberliegenden Seite der Tragplatte angeordneten Ende 184 ein Antriebsrad 186 trägt, welches mit einem Abtriebsrad 188 eines Gesamtantriebs 190 kämmt.

Das Planetengetriebe 150 erlaubt nun einen Wechsel zwischen einem Antrieb des Schwenklagerkörpers 14 durch Antreiben des Hohlrades 158 und einem Antrieb der Gewindespindel 100 durch Antrieb des Sonnenrades 152 seitens der Planetenräder 154, die durch Drehen des Planetenradträgers 156 mittels des Gesamtantriebs 190 um die Schwenkachse 22 umlaufend bewegbar sind.

Der Wechsel zwischen einem Antrieb der Gewindespindel 100 und einem Antrieb des Hohlrades 158 erfolgt dabei - wie bei einem Planetengetriebe üblich - abhängig davon, ob eine Drehbewegung des Hohlrades 158 oder eine Drehbewegung des Sonnenrades 152 blockiert ist.

In der verriegelten Stellung des Schwenklagerkörpers 14, dargestellt in Fig. 12, ist das Hohlrad 158 in hinsichtlich einer Drehbewegung um die Schwenkachse 22 blockiert, da der drehfest mit dem Hohlrad 158 verbundene Schwenklagerkörper 14 auf dem Führungskörper 40 durch die Drehblockierkörper 54 drehfest festgelegt ist, die auf den Druckflächen 66a des in seiner ersten Drehblockierstellung stehenden Betätigungskörpers 52 aufsitzen.

Aus diesem Grund bewirkt ein Antreiben des Planetenradträgers 156 eine Drehbewegung des Sonnenrades 152 mit der für ein Planetengetriebe üblichen Untersetzung, so dass dadurch die Gewindespindel 100 derart antreibbar ist, dass diese den Betätigungskörper 52 in der Richtung 73 bewegt, und zwar so lange, bis, wie in Fig. 13 dargestellt, in der Freilaufstellung des Betätigungskörpers 52 die Drehblockierkörper 54 auf der Rückzugsaufnahme 62 aufliegen. Damit geben die Drehblockierkörper 54 die Drehbewegung des Schwenklagerkörpers 14 relativ zum Führungskörper 40 frei und dieser ist nun in der Lage, sich um die Schwenkachse 22 zu drehen, was zur Konsequenz hat, dass auch das Hohlrad 158 nicht mehr drehfest stehen bleibt, sondern die Möglichkeit hat, sich ebenfalls zu drehen.

Um eine definierte Schwenkbewegung des Schwenklagerkörpers 14 in dieser Freilaufstellung des Betätigungskörpers 52 und der Drehblockierkörper 54 durchführen zu können, ist noch eine als Ganzes mit 200 bezeichnete erste Hemmvorrichtung vorgesehen.

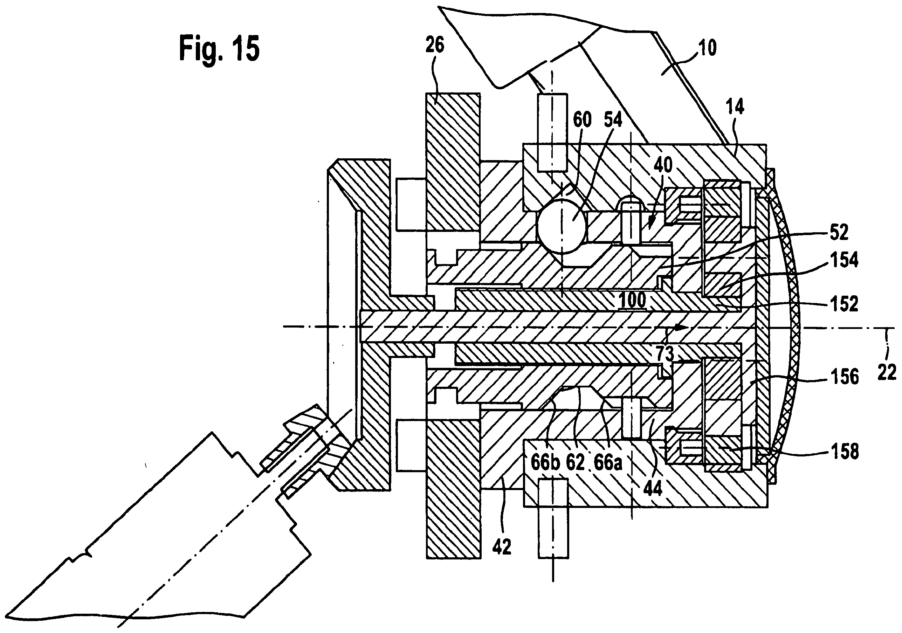

Die erste Hemmvorrichtung 200 umfasst, wie in Fig. 12 bis 19 dargestellt, einen Hemmkörper 202, welcher in einer Führungsaufnahme 204 der Führungshülse 44 in einer Führungsrichtung 206, die vorzugsweise radial zur Schwenkachse 22 verläuft, bewegbar ist und mit einer inneren Kulissenbahn 210, die am Betätigungskörper 52 vorgesehen ist, sowie einer äußeren Kulissenbahn 212, die am Schwenklagerkörper 14 angeordnet ist, zusammenwirkt.

Die innere Kulissenbahn 210, vorgesehen in einem radial außen liegenden Bereich des Betätigungskörpers 52 ist zum Teil als radiale Ausnehmung im Betätigungskörper 52 ausgebildet und umfasst eine am Ausnehmungsgrund parallel zur axialen Richtung 64 verlaufende innen liegende Gleitfläche 220, eine schräg zur innen liegenden Gleitfläche radial zunehmend nach außen verlaufende Hemmfläche 222 und eine sich an die Hemmfläche 222 anschließende außen liegende Gleitfläche 224, die im einfachsten Fall durch einen Mantelbereich des Betätigungskörpers 52 gebildet ist.

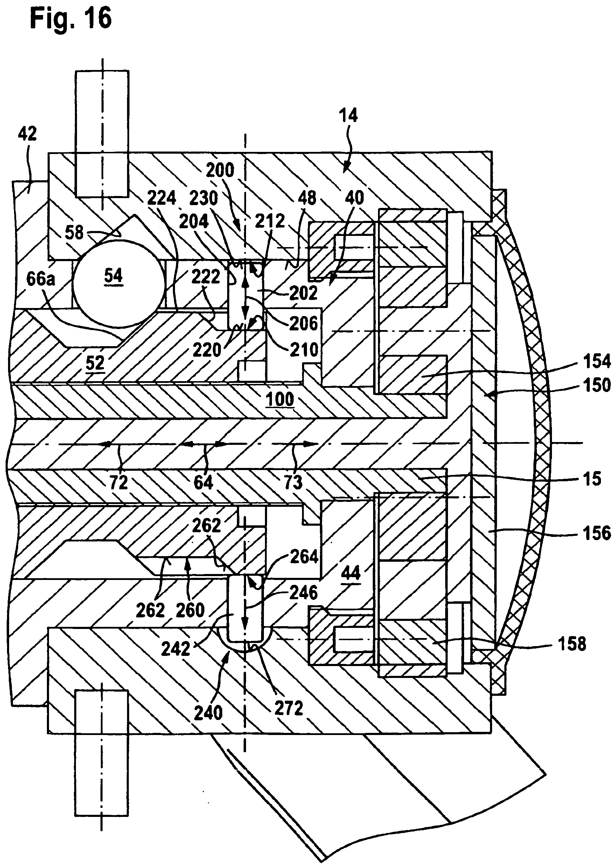

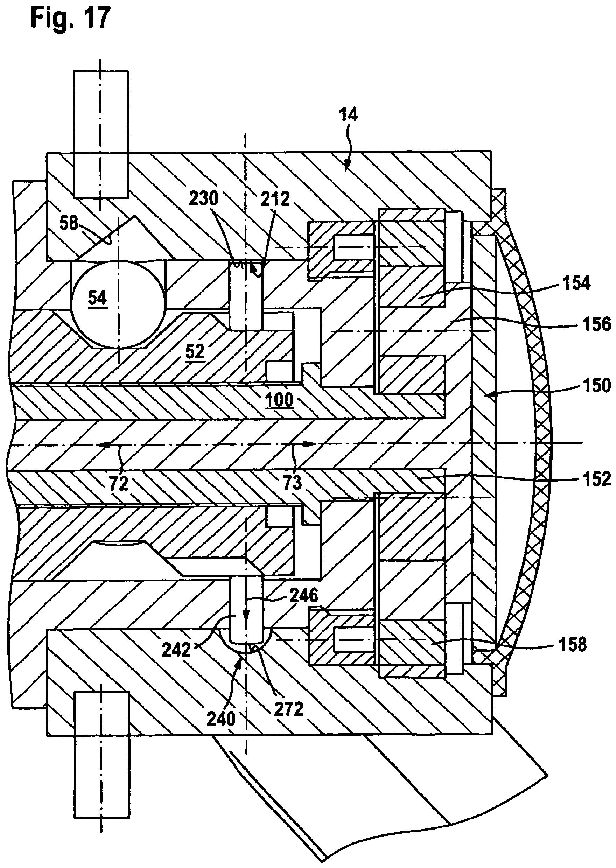

Die äußere Kulissenbahn 212 umfasst eine durch einen Teilbereich der Innenfläche 48 des Schwenklagerkörpers 14 gebildete Gleitfläche 230, dargestellt in Fig. 16 und 17 und eine sich an die Gleitfläche 230 anschließende radial zur Schwenkachse 22 nach außen verlaufende Vertiefung 232, die dem Hemmkörper 202 nur dann gegenüberliegend angeordnet ist, wenn der Schwenklagerkörper 14 in einer definierten Schwenkstellung, beispielsweise in der Ruhestellung, steht.

Die erste Hemmvorrichtung 200 funktioniert nun, wie in den Fig. 16 bis 19, welche den Fig. 12 bis 15 entsprechen, dargestellt, so, dass der Hemmkörper 202 in der ersten Drehblockierstellung zwischen der innen liegenden Gleitfläche 220 der inneren Kulissenbahn 210 und der Gleitfläche 230 der äußeren Kulissenbahn 212 mit geringem Spiel angeordnet ist.

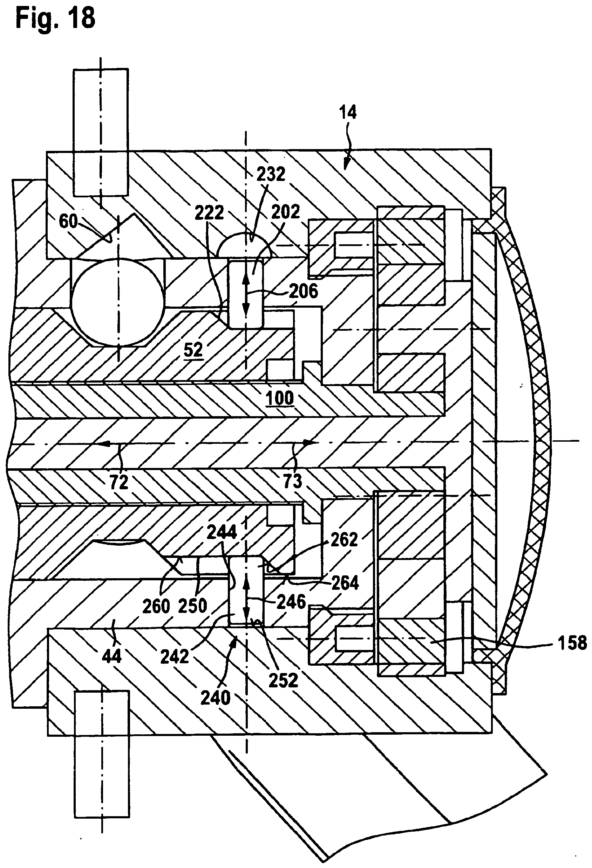

Die innen liegende Gleitfläche 220 hat nun eine derartige Länge, dass der Betätigungskörper 52 von der ersten Drehblockierstellung, dargestellt in Fig. 16 in die Freilaufstellung, dargestellt in Fig. 17 und Fig. 18 bewegbar ist, ohne dass der Hemmkörper 202 die Hemmfläche 222 der inneren Kulissenbahn 210 erreicht.

Der Hemmkörper 202 berührt, wie in Fig. 17 und Fig. 18 dargestellt, die Hemmfläche 222 der inneren Kulissenbahn 210 dann, wenn der Betätigungskörper 52 in der Freilaufstellung steht, wie in Fig. 17 und Fig. 18 dargestellt.

In der Freilaufstellung kommt die Hemmfläche 222 an dem Hemmkörper 202 zur Anlage und eine weitere Verschiebung des Betätigungskörpers 52 in der Richtung 73 über die Freilaufstellung hinaus in Richtung der zweiten Drehblockierstellung würde es erforderlich machen, dass der Hemmkörper 202 aufgrund der Wechselwirkung mit der Hemmfläche 222 die Möglichkeit haben müsste, sich in seiner Führungsrichtung 206 radial zur Schwenkachse 22 nach außen zu bewegen. Diese Bewegung des Hemmkörpers 202 ist jedoch durch die Gleitfläche 230 der äußeren Kulissenbahn 212 so lange blockiert, bis der Schwenklagerkörper 14 so weit um die Schwenkachse 22 verschwenkt ist, dass dem Hemmkörper 202 die Vertiefung 232 der äußeren Kulissenbahn 212 gegenübersteht.

So lange dies jedoch nicht der Fall ist, hemmt der Hemmkörper 202 durch Zusammenwirken mit der Hemmfläche 222 beim Verschieben des Betätigungskörpers 52 von der ersten Drehblockierstellung in die Freilaufstellung in dieser Freilaufstellung, wie in Fig. 17 dargestellt, eine weitere Verschiebebewegung des Betätigungskörpers 52 in der Richtung 73 und dadurch erfolgt eine Blockade der Drehbewegung der Gewindespindel 100 und somit der Drehbewegung des Sonnenrads 152.

Bei weiterem Antrieb des Planetengetriebes 150 durch den Gesamtantrieb 190 erfolgt aufgrund der Blockierung des Sonnenrads 152 ein Drehantrieb des Hohlrades 158 durch die umlaufenden Planetenräder 154 und eine derartige Drehbewegung des Hohlrades 158 ist dadurch möglich, dass der Betätigungskörper 52 und somit auch die Drehblockierkörper 54 in der Freilaufstellung stehen und die Drehbewegung des Schwenklagerkörpers 14 freigeben.

Somit bewirkt der weiterlaufende Gesamtantrieb 190 bei Erreichen der Freilaufstellung ausschließlich eine Schwenkbewegung des Schwenklagerkörpers 14, beispielsweise von der Arbeitsstellung A in die Ruhestellung R und in dieser Ruhestellung liegt dann, wie in Fig. 18 dargestellt, die Vertiefung 232 der äußeren Kulissenbahn 212 gegenüber.

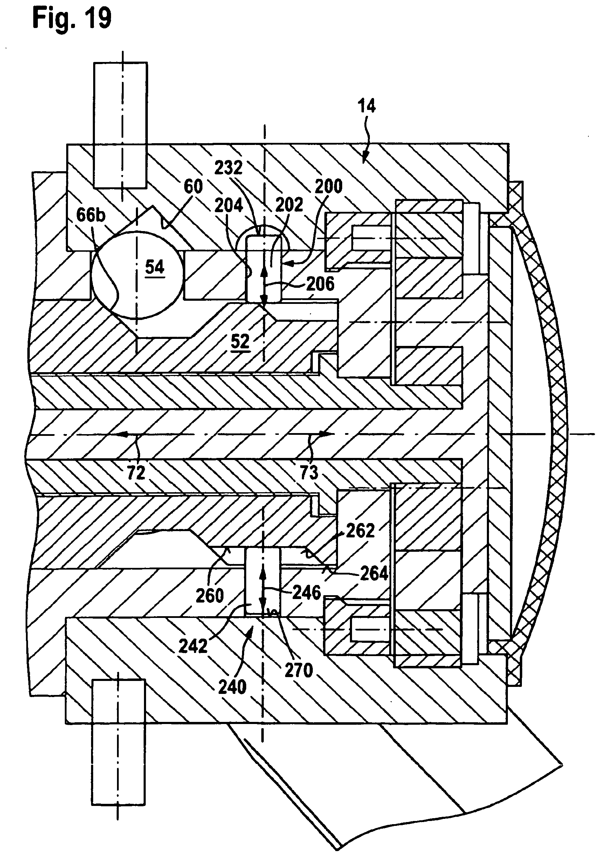

In diesem Moment wird die Hemmwirkung des mit der Hemmfläche 222 der innen liegenden Kulissenbahn 210 zusammenwirkenden Hemmkörpers aufgehoben, da sich der Hemmkörper 202 in seiner Führungsrichtung 206 radial nach außen durch Entlanggleiten auf der Hemmfläche 222 bewegen und die außen liegende Gleitfläche 224 erreichen kann. Dies erlaubt, wie in Fig. 18 und 19 dargestellt, ein weiteres Verschieben des Betätigungskörpers 52 in der Richtung 73, so dass der Betätigungskörper 52 von der Freilaufstellung in die zweite Drehblockierstellung übergehen kann, in welcher die Druckflächen 66b die Drehblockierkörper 54 in die Aufnahmen 60 hineinbewegen und dadurch den Schwenklagerkörper 14 drehfest verriegeln.

Die erste Hemmvorrichtung 200 hat somit die Aufgabe, die Verschiebebewegung des Betätigungskörpers 52 beim Übergang von der ersten Drehblockierstellung in die Freilaufstellung in der Freilaufstellung so lange zu hemmen, bis eine Schwenkbewegung des Schwenklagerkörpers 14 von der Arbeitsstellung A in die Ruhestellung R erfolgt ist und erst dann wieder eine Fortsetzung der Verschiebebewegung des Betätigungskörpers 52 in der Richtung 73 zuzulassen, wenn die Schwenkbewegung des Schwenklagerkörpers 14 von der Arbeitsstellung A in die Ruhestellung R beendet ist.

Soll nun in der Ruhestellung R wiederum die Verriegelung des Schwenklagerkörpers 14 gelöst und der Schwenklagerkörper von der Ruhestellung R in die Arbeitsstellung A zurückgedreht und in der Arbeitsstellung A verriegelt werden, so erfolgt ein Umschalten der Drehrichtung des Gesamtantriebs 190 und eine Verschiebung des Betätigungskörpers 52 in der Richtung 72. In diesem Fall wird ausgehend von der zweiten Drehblockierstellung, die den Schwenklagerkörper 14 in der Ruhestellung R verriegelt, zunächst die in Fig. 18 dargestellte Freilaufstellung erreicht, in welcher die Verriegelung des Schwenklagerkörpers 14 gelöst ist.

Um nun in dieser Stellung zu verhindern, dass die Gewindespindel 100 den Betätigungskörper 52 in Richtung der ersten Drehblockierstellung weiter in Richtung 72 verschiebt, ist eine zweite Hemmvorrichtung 240 vorgesehen, die ebenfalls einen Hemmkörper 242 aufweist, welcher in einer Führungsaufnahme 244 in der Führungshülse 44 geführt ist und in einer Führungsrichtung 246 radial zur Schwenkachse bewegbar ist.

Auch die zweite Hemmvorrichtung umfasst eine innere Kulissenbahn 250 und eine äußere Kulissenbahn 252, wobei die innere Kulissenbahn 250 analog zur ersten Hemmvorrichtung eine innen liegende Gleitfläche 260, eine Hemmfläche 262 und eine außen liegenden Gleitfläche 264 aufweist, die ebenfalls in einem radial außen liegenden Bereich des Betätigungskörpers 52 vorgesehen sind, welcher beispielsweise in einem Winkelabstand von der ersten Hemmvorrichtung 200, vorzugsweise dieser gegenüberliegend, am Betätigungskörper 52 angeordnet ist.

Ferner weist die äußere Kulissenbahn 252 der zweiten Hemmvorrichtung 240 eine Gleitfläche 270 und eine Vertiefung 272 auf, wobei die Vertiefung 272 nur dann dem Hemmkörper 242 gegenüberliegend angeordnet ist, wenn der Schwenklagerkörper 14 in seiner Arbeitsstellung steht und ansonsten die Gleitfläche 270 wirksam ist.

Bei einer Bewegung des Betätigungskörpers 52 in der Richtung 72 wird nun die zweite Hemmvorrichtung 240 in analoger Weise wirksam wie die erste Hemmvorrichtung 200, es erfolgt nämlich nach Bewegen des Betätigungskörpers 52 von der zweiten Drehblockierstellung in die Freigabestellung eine Hemmung einer weiteren Bewegung des Betätigungskörpers 52 in dieser Richtung, somit eine Hemmung der Drehbewegung der Gewindespindel 100 und des Sonnenrades 152, so dass die weiter durch den Gesamtantrieb 190 angetriebenen Planetenräder 154 aufgrund des in der Freilaufstellung nicht mehr verriegelten Schwenklagerkörpers 14, wie in Fig. 18 dargestellt, das Hohlrad 158 antreiben und damit den Schwenklagerkörper 14 von der Ruhestellung R in die Arbeitsstellung A verschwenken.

Bei Erreichen der Arbeitsstellung A des Schwenklagerkörpers 14 steht die Vertiefung 272 dem Hemmkörper 242 gegenüber, so dass dieser nun unter Einwirkung der Hemmfläche 262 die Möglichkeit hat, in seiner Führungsrichtung 246 radial zur Schwenkachse 22 nach außen auszuweichen, wie dies in Fig. 17 dargestellt ist.

Damit wird die Hemmung der Bewegung des Betätigungskörpers 52 in der Richtung 72 aufgehoben und das Planetengetriebe 150 treibt wieder über das Sonnenrad 152 die Gewindespindel 100 an, so dass diese den Betätigungskörper 52 in der Richtung 72 weiter in Richtung seiner ersten Drehblockierstellung verschieben kann, in welcher die Drehblockierkörper 54 wieder in die Drehblockierstellung übergehen und in die Aufnahmen 58 eingreifen, um den Schwenklagerkörper 14 in der Arbeitsstellung A zu verriegeln.

Ferner verlässt bei der Schwenkbewegung des Schwenklagerkörpers 14 von der Ruhestellung R in die Arbeitsstellung A der erste Hemmkörper 202 der ersten Hemmvorrichtung 200 die Vertiefung 232 und gleitet wieder längs der Gleitfläche 230 der äußeren Kulissenbahn 212.

Die Hemmkörper 202 und 242 der Hemmvorrichtungen 200 und 240 können in unterschiedlichster Art und Weise ausgebildet sein. Beispielsweise können die Hemmkörper 202 und 242, wie in den Fig. 16 bis 19 dargestellt, zylindrische Stifte sein. Es ist aber auch denkbar, die Hemmkörper 202 und 242 ähnlich den Drehblockierkörpern 54 als Kugeln auszubilden und die inneren Kulissenbahnen 210 und 250 sowie die äußeren Kulissenbahnen 212 und 252 in ihrer Form und ihrem Verlauf entsprechend anzupassen.

Die erfindungsgemäße Lösung gemäß dem zweiten Ausführungsbeispiel erlaubt es somit, einen Gesamtantrieb 190 zu verwenden und mit dem Gesamtantrieb durch Antreiben des Planetengetriebes 150 in einer einzigen Drehrichtung zunächst die Verriegelung des Schwenklagerkörpers 14 gegenüber dem Führungskörper 40 zu lösen, den Schwenklagerkörper 14 von einer Drehstellung, beispielsweise der Arbeitsstellung A oder der Ruhestellung R in die jeweils andere Drehstellung, beispielsweise die Ruhestellung R oder die Arbeitsstellung A, zu verschwenken und in dieser jeweils anderen Drehstellung wiederum den Schwenklagerkörper 14 relativ zum Führungskörper 40 zu verriegeln.

Durch einen einfachen Wechsel der Drehrichtung des Gesamtantriebs ist es dann wiederum möglich, in der anderen Drehstellung, beispielsweise der Ruhestellung R oder der Arbeitsstellung A, die Verriegelung des Schwenklagerkörpers 14 relativ zum Führungskörper 40 zu lösen, den Schwenklagerkörper 14 von der anderen Drehstellung in die eine Drehstellung, beispielsweise die Arbeitsstellung A oder die Ruhestellung R, zurückzuverschwenken und in dieser jeweils einen Drehstellung wiederum den Schwenklagerkörper 14 relativ zum Führungskörper 40 zu verriegeln.

Die einzige schaltungstechnische Maßnahme bei einem derartigen Ausführungsbeispiel der erfindungsgemäßen Lösung ist somit das Bestromen des Gesamtantriebs in der jeweils erforderlichen Drehrichtung, wobei die beim Einschalten des Gesamtantriebs 190 zu wählende Drehrichtung eindeutig mit der jeweiligen Drehstellung, in der der Schwenklagerkörper 14 steht und verriegelt ist, korreliert ist.

Vorzugsweise sind bei dem zweiten Ausführungsbeispiel die Aufnahmen 58 und 60 als kegelförmige Aufnahmen ausgebildet, so dass, wie in Fig. 16 und 19 erkennbar in diese Aufnahmen eindringende Drehblockierkörper 54 durch Zusammenwirken mit der kegelförmigen Aufnahme 58 oder 60 eine Kraft auf den Schwenklagerkörper 14 erzeugt, die in Richtung des Flansches 42 wirkt und diesen somit kraftbeaufschlagt an dem Flansch 42 anlegt.

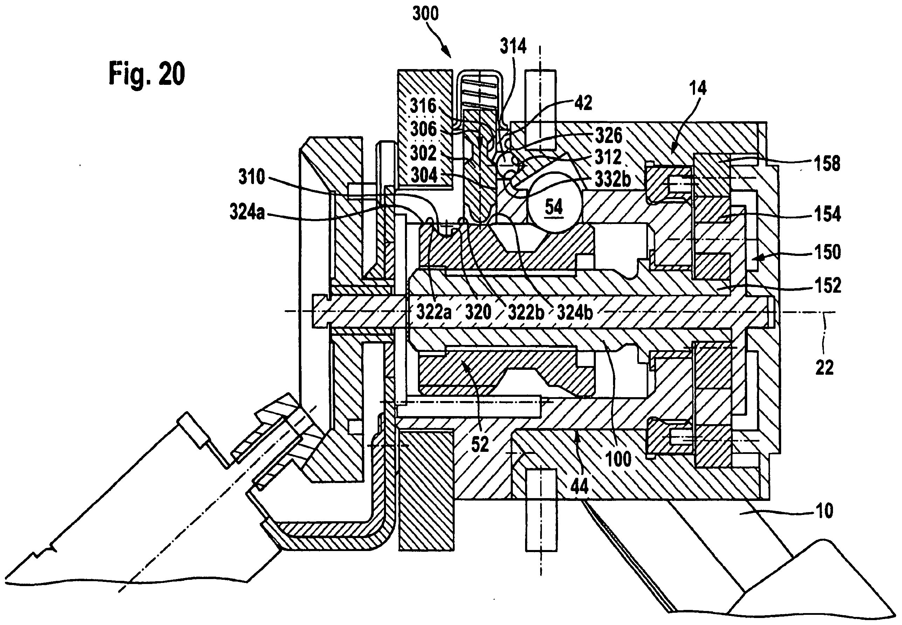

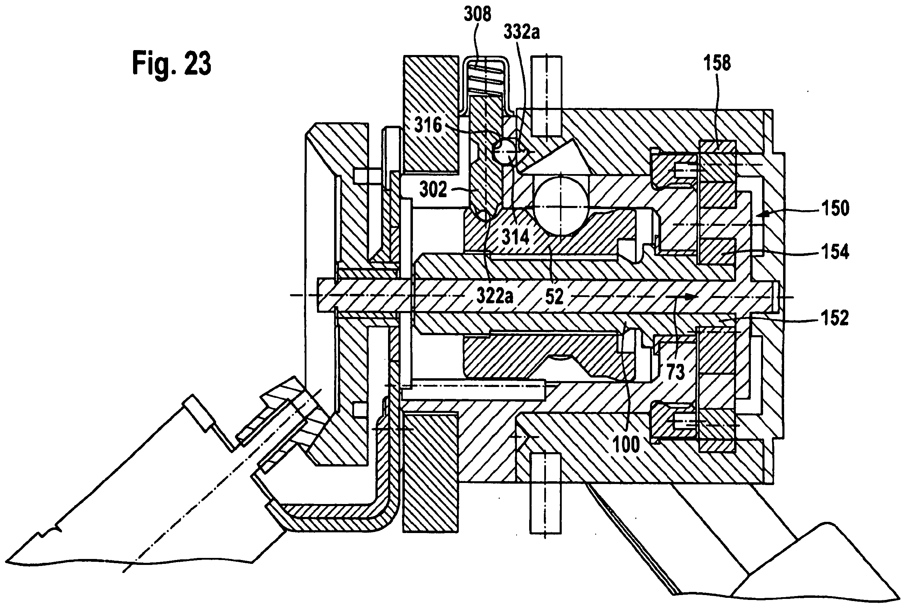

Bei einem dritten Ausführungsbeispiel, dargestellt in den Fig. 20 bis 24 sind diejenigen Teile, die mit denen des ersten und des zweiten Ausführungsbeispiels identisch sind, mit denselben Bezugszeichen versehen, so dass hinsichtlich der Beschreibung derselben vollinhaltlich auf die Ausführungen zu diesen Ausführungsbeispielen Bezug genommen wird.

Im Gegensatz zum zweiten Ausführungsbeispiel ist bei dem dritten Ausführungsbeispiel eine einzige Hemmvorrichtung 300 vorgesehen, die die Funktion der ersten Hemmvorrichtung 200 und der zweiten Hemmvorrichtung 240 vereint.

Die Hemmvorrichtung 300 umfasst dabei einen Hemmkörper 302, welcher in einer Führungsaufnahme 304 der Führungshülse 44, in diesem Fall des Flansches 42 der Führungshülse 44, in einer Führungsrichtung 306, die vorzugsweise ebenfalls radial zur Schwenkachse 22 verläuft, bewegbar ist und mit einer inneren Kulissenbahn 310, die am Betätigungskörper 52 vorgesehen ist, sowie einer äußeren Kulissenbahn 312, die am Schwenklagerkörper 14 angeordnet ist, unter Vermittlung eines Hilfskörpers 314, welcher mit einer Hilfskulisse 316 an dem Hemmkörper 302 zusammenwirkt.

Die innere Kulissenbahn 310 ist dabei in einem radial außenliegenden Bereich des Betätigungskörpers 52 vorgesehen und weist einen radial vertieften Flächenbereich 220 sowie schräg zum Flächenbereich 220 radial nach außen zunehmend verlaufende Hemmflächen 322a und 322b auf und sich jeweils auf dem Flächenbereich 320 gegenüberliegenden Seiten der Hemmflächen 322a und 322b an diese Hemmflächen 322a und 322b anschließende und radial außenliegende Gleitflächen 324a und 324b, die im einfachsten Fall durch einen Mantelbereich des Betätigungskörpers 52 gebildet sind.

Die äußere Kulissenbahn 312 ist an einer dem Flansch 42 zugewandten Stirnfläche 326 des Schwenklagerkörpers 14 vorgesehen und umfasst eine durch die Stirnfläche 326 gebildete Gleitfläche 330 sowie in Azimutalrichtung beiderseits dieser Gleitfläche 330 liegende und vom Flansch 42 weg, sich in den Schwenklagerkörper hinein erstreckende Vertiefungen 332a und 332b.

Die Hemmvorrichtung 300 funktioniert nun, wie in den Fig. 20 bis 24 dargestellt, so, dass bei in Arbeitsstellung stehendem Kugelhals 10 der Hemmkörper 302 in der ersten Drehblockierstellung des Betätigungskörpers 52 auf der Gleitfläche 324b aufsitzt, und in dieser Stellung bewirkt die Hilfskulisse 316, dass der Hilfskörper 314 in die Vertiefung 332b der äußeren Kulissenbahn 312 eintaucht und somit eine Drehbewegung des Schwenklagerkörpers 14 blockiert, in gleicher Weise wie dies der Fall ist bei der Funktion der zweiten Hemmvorrichtung 240 beim zweiten Ausführungsbeispiel.

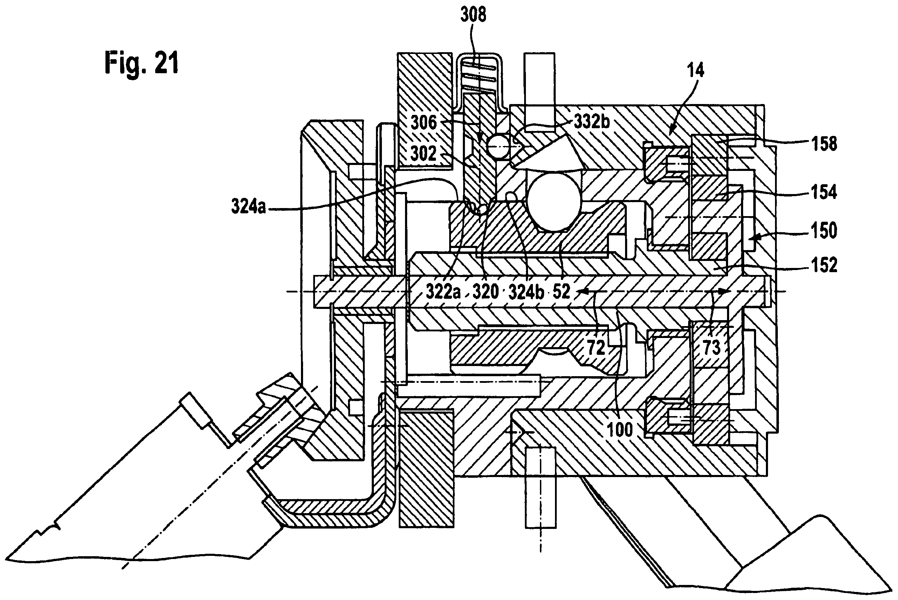

Wird nun der Betätigungskörper 52 in die Freilaufstellung bewegt, wie in Fig. 21 dargestellt, so hat dies auch zur Folge, dass in der Freilaufstellung der Hemmkörper 302 in den radial vertieften Flächenbereich 220 eintaucht und somit durch die Bewegung der Hilfskulisse 316 und des Hilfskörpers 314 eine Drehfreigabe des Schwenklagerkörpers 14 erfolgt.

In dieser Stellung hat nun der Schwenklagerkörper 14 die Möglichkeit, sich um die Schwenkachse 22 zu drehen, da weder die Drehblockierkörper 54 noch der Hilfskörper 314 die Drehbewegung behindern.

Eine weitere Bewegung des Betätigungskörpers 52 in der Richtung 73 bewirkt, dass der Hemmkörper 302 an der Hemmfläche 322a zur Anlage kommt, welche aufgrund ihres Verlaufs die Tendenz hat, den Hemmkörper 302 radial nach außen zu verschieben, und zwar gegen die Kraftwirkung einer Hemmfeder 308, die den Hemmkörper 302 in Richtung des Betätigungskörpers 52 mit einer Kraft beaufschlagt.

Durch die Hemmfeder 308 und den Hemmkörper 302 wird somit in der Freilaufstellung des Betätigungskörpers 52 dessen weitere Bewegung in Richtung 73 gehemmt, was dazu führt, dass eine Hemmung der Drehbewegung der Gewindespindel 100 eintritt und somit eine Hemmung der Drehbewegung des Sonnenrads 152, so dass dadurch das Planetengetriebe 150, weiter angetrieben durch den Gesamtantrieb 190 aufgrund der Hemmung des Sonnenrads 152 einen Drehantrieb des Hohlrades 158 durch die umlaufenden Planetenräder 154 bewirkt.

Ein Verschwenken des Schwenklagerkörpers 14 hat nun zur Folge, dass sich die Vertiefung 332b von ihrer dem Hilfskörper 314 gegenüberliegenden Position wegbewegt und nunmehr dem Hilfskörper 314 die Gleitfläche 330 gegenüberliegt, so dass der Hilfskörper 314 seinerseits mit der Hilfskulisse 316 zusammenwirkt und dadurch eine Bewegung des Hemmkörpers 302 in Richtung von dem Betätigungskörper 52 weg blockiert, so dass die Hemmwirkung des Hemmkörpers 302 hinsichtlich einer Bewegung des Betätigungskörpers 52 in Richtung 73 durch Formschluss, nämlich durch den Hilfskörper 314 mit der Hilfskulisse 316, während der Schwenkbewegung des Schwenklagerkörpers 14 aufrecht erhalten wird und nicht nur durch die Hemmfeder 308 aufrecht erhalten werden muss.

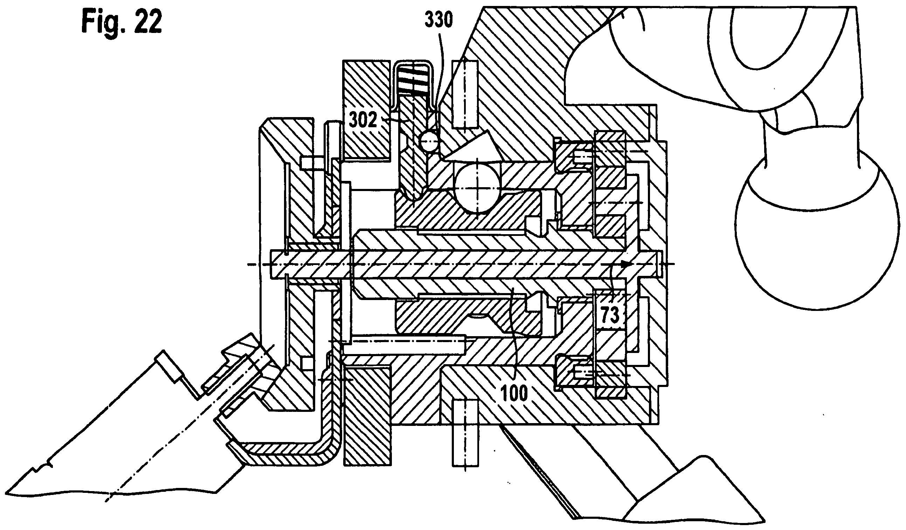

Dieser Zustand des Hemmkörpers 302, dargestellt in Fig. 22 wird so lange aufrecht erhalten, bis die Ruhestellung R erreicht wird, in welcher dem Hilfskörper 314 die Vertiefung 332a gegenüberliegt.

Ferner wird die Schwenkbewegung des Schwenklagerkörpers 14 in der Ruhestellung durch einen zeichnerisch nicht dargestellten Anschlag beendet.

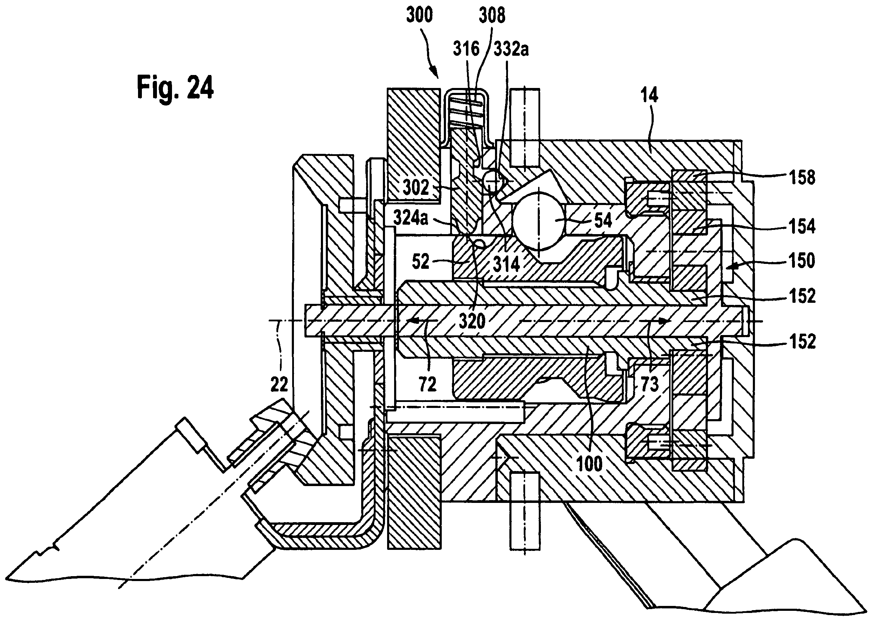

Dadurch erfolgt wiederum eine Blockierung der Drehbewegung des Hohlrades 158 und das Planetengetriebe 150 wirkt dann mit einem derart großen Drehmoment auf die Gewindespindel 100, so dass diese den Betätigungskörper 52 mit einer derart großen Kraft in Richtung 73 weiter verschiebt, so dass die Hemmwirkung des Hemmkörpers 302 und der Hemmfeder 308 überwunden werden kann und der Hemmkörper über die Hemmfläche 322a hinweg gleitet und radial nach außen verschoben wird, so dass sich der Betätigungskörper 52 weiter in Richtung 73 bewegen kann und schließlich der Hemmkörper 302, wie in Fig. 24 dargestellt, auf der außen liegenden Gleitfläche 324a des Betätigungskörpers 52 aufliegt.

Damit verlässt der Betätigungskörper 52 unter Überwindung der Hemmwirkung des Hemmkörpers 302 und der Hemmfeder 308 die Freilaufstellung und geht in die der Ruhestellung zugeordnete Drehblockierstellung über, in welcher die Drehblockierkörper 54 wiederum die Drehbewegung des Schwenklagerkörpers 14 blockieren.

Außerdem führt das Verschieben des Hemmkörpers 302 radial nach außen gegen die Kraft der Hemmfeder 308 dazu, dass die Hilfskulisse 316 den Hilfskörper 314 in Richtung der Vertiefung 332a verschiebt und in diese eintauchen lässt, so dass dadurch noch gleichzeitig eine zusätzliche Blockierung des Schwenklagerkörpers 14 erfolgt.

Die Hemmvorrichtung 300 wirkt bei einer Bewegung des Drehblockierkörpers 54 in Richtung 72 in vergleichbarer Weise, das heißt zuerst geht der Drehblockierkörper 54 in seine Freilaufstellung über und in diesem Zustand taucht der Hemmkörper 302 in den Flächenbereich 320 ein, so dass auch der Hilfskörper 314 wiederum die Vertiefung 332a verlassen kann und insgesamt der Schwenklagerkörper 14 die Möglichkeit hat, um die Schwenkachse 22 zu verschwenken.

Bei einer weiteren Bewegung in Richtung 72 entfaltet der Hemmkörper 302 mit der Hemmfeder 308 wieder seine Wirkung so dass eine Hemmung der Bewegung des Drehblockierkörpers 54 in Richtung 72 und somit eine Hemmung der Drehbewegung der Gewindespindel 100 erfolgt, was wieder zur Konsequenz hat, dass über das Planetengetriebe 150 ein Drehantrieb des Hohlrades 158 und somit ein Drehantrieb für die Schwenkbewegung des Schwenklagerkörpers 14 erfolgt.

Nach Verlassen der Ruhestellung erfolgt wieder eine Blockierung der Bewegung des Hemmkörpers 302 radial nach außen durch den Hilfskörper 314 und die Hilfskulisse 316 so lange, bis die Arbeitsstellung, dargestellt in Fig. 21, erreicht ist und in dieser erfolgt wiederum ein Bewegen des Hemmkörpers 302 entgegen der Kraft der Hemmfeder 308 radial nach außen, da durch den für den Schwenklagerkörper 14 vorgesehenen und zeichnerisch nicht dargestellten Anschlag in der Arbeitsstellung ein Weiterverschwenken des Schwenklagerkörpers 14 nicht möglich ist und somit das von dem Planetengetriebe 150 auf die Gewindespindel 100 wirkende Drehmoment so weit ansteigen kann, dass die auf den Betätigungskörper 52 wirkende Kraft in Richtung 72 in der Lage ist, entgegen der Kraft der Hemmfeder 308 den Hemmkörper 302 radial nach außen zu verschieben, so dass der Hemmkörper 302 in der Arbeitsstellung schließlich wieder auf der außen liegenden Gleitfläche 324b aufsitzt, wie dies in Fig. 20 dargestellt ist.

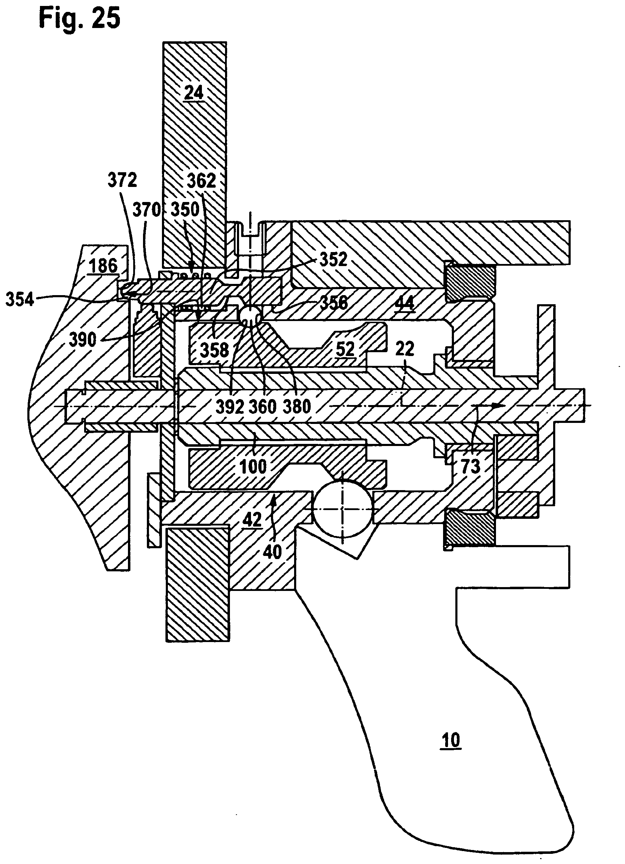

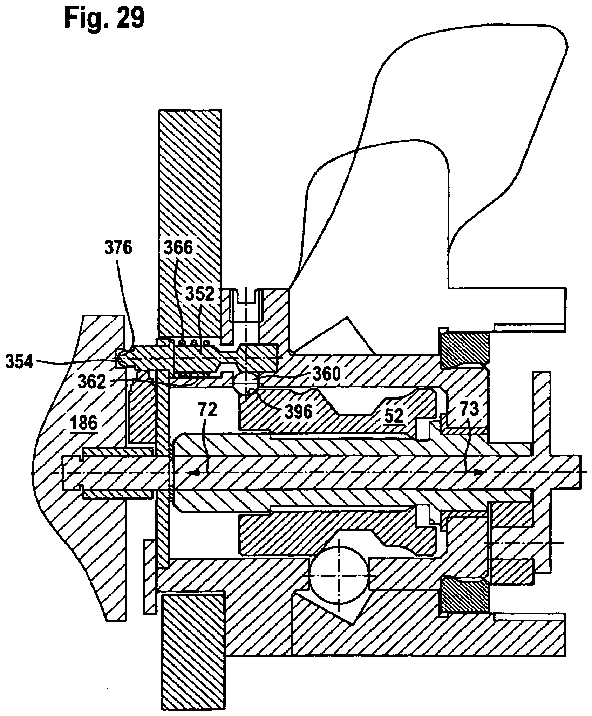

Wie außerdem in Fig. 25 bis 29 dargestellt, umfasst das dritte Ausführungsbeispiel der erfindungsgemäßen Anhängekupplung noch eine beispielsweise zusätzliche, als Ganzes mit 350 bezeichnete Sicherungsvorrichtung, gebildet durch einen Sicherungsstift 352, welcher einen Kopf 354 sowie eine gegenüber einer Mantelfläche 356 des Sicherungsstifts 352 radial eingezogene Einschnürung 358 aufweist. Ferner ist zusätzlich zum Sicherungsstift 352 noch ein mit der Mantelfläche 356 und der Einschnürung 358 zusammenwirkender Sicherungskörper 360 vorgesehen.

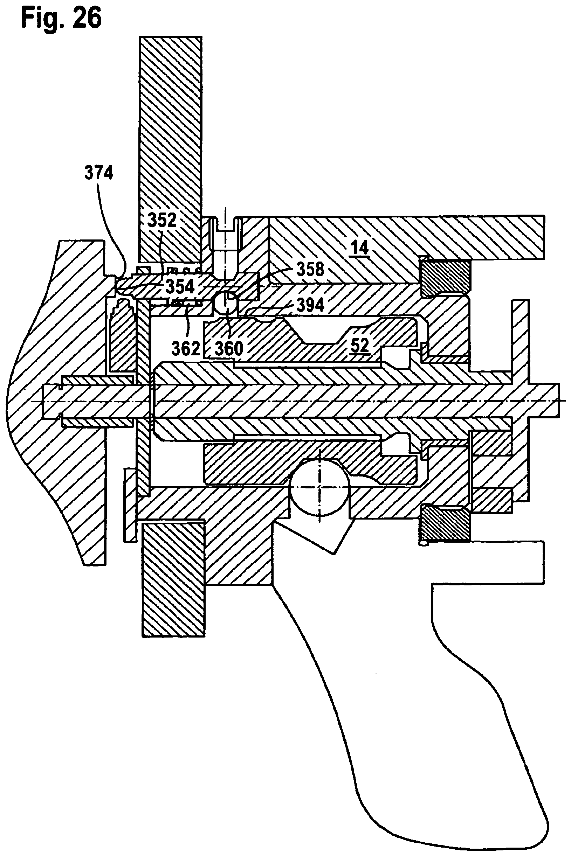

Der Sicherungsstift 352 ist seinerseits in einer parallel zur Schwenkachse 22 verlaufenden Bohrung 362 in dem Führungskörper 40 geführt und steht mit seinem Kopf 354 auf einer dem Antriebsrad 186 zugewandten Seite über den Führungskörper 40 über, so dass der Kopf 354 die Möglichkeit hat, mit einer an dem Antriebsrad 186 vorgesehenen Betätigungsbahn 370 in Wechselwirkung zu treten, welche, wie in Fig. 25 dargestellt, eine erste Vertiefung 372 aufweist und, wie beispielsweise in Fig. 26 dargestellt, einen den Kopf 354 beaufschlagenden Betätigungsbereich 374 aufweist, welcher den Sicherungsstift 352 soweit in die Bohrung 362 einschiebt, dass der Sicherungskörper 360 die Möglichkeit hat, in die Einschnürung 358 einzutauchen, während in der die Fig. 25 dargestellten Stellung des Sicherungsstifts 352, in welcher dessen Kopf 354 in die Vertiefungen 372 im Antriebsrad 386 hineinragt, der Sicherungskörper 360 auf der Mantelfläche 356 des Sicherungsstifts 352 aufliegt und somit über eine Führungsbohrung 380 in Richtung des Betätigungskörpers 52 übersteht und somit in eine der Arbeitsstellung zugeordnete Vertiefung 392 einer Sicherungskulisse 390 des Betätigungskörpers 52 eintaucht und diesen Betätigungskörper 52 in der der Arbeitsstellung A entsprechenden Stellung sichert.

Solange der Sicherungskörper 360 auf dem Freigabeabschnitt 394 entlang gleitet, hat der Sicherungsstift 352 auch nicht die Möglichkeit, in eine in dem Antriebsrad 186 vorgesehene Vertiefung einzutauchen, sondern dieser wird in seiner in die Bohrung 362 eingeschobenen Stellung festgehalten.

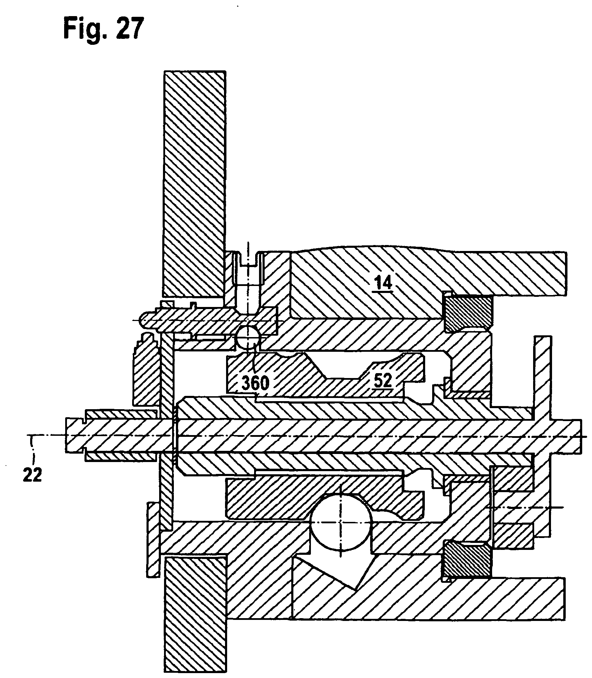

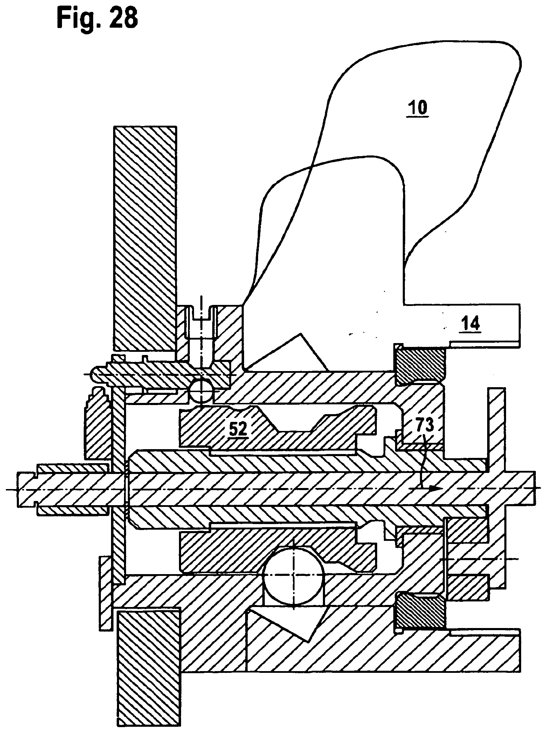

Dies gilt insbesondere für die in Fig. 26 bis 28 dargestellten Freilaufstellungen des Betätigungskörpers 52, wobei die Fig. 26 der Freigabestellung dem in Arbeitsstellung A stehendem Schwenklagerkörper 14 entspricht, in Fig. 27 ein Schwenken des Schwenklagerkörpers 14 um die Schwenkachse 22 erfolgt und in Fig. 28 die Ruhestellung R des Schwenklagerkörpers mit dem Kugelhals 10 erreicht ist, in welcher dann unter Weiterbewegung des Betätigungskörpers 52 in der Richtung 73 dieser in seine der Ruhestellung zugeordnete Drehblockierstellung übergeht, wobei dann der Sicherungskörper 360 die Möglichkeit hat, in die Vertiefung 396 der Sicherungskulisse 390 einzutauchen und damit dem Sicherungsstift 352 die Möglichkeit zu geben, sich aus der Bohrung 362 herauszubewegen und mit dem Kopf 354 in eine der Ruhestellung R zugeordnete zweite Vertiefung 376 im Antriebsrad 186 einzutauchen, so dass der Sicherungskörper 360 in seiner in die Vertiefung 396 eingreifenden Stellung formschlüssig blockiert ist und damit eine formschlüssige Blockade des Drehblockierkörpers 54 in der Ruheposition R bewirkt.

In gleicher Weise wie die erste Vertiefung 372 ist die zweite Vertiefung 376 so ausgebildet, dass der Kopf 354 nach einer geringen Drehbewegung des Antriebsrades 186 zum Erzeugen einer Bewegung des Drehblockierkörpers 54 in Richtung 72 wiederum aus dieser heraus bewegt wird und der Sicherungsstift 352 in die Bohrung 362 eingedrückt wird, so dass nach Beginn einer Drehung des Antriebsrades 186 wiederum die Blockierung des Betätigungskörpers 52 durch den Sicherungskörper 360 aufgehoben wird, um den Betätigungskörper 52 dann wieder in die Richtung 72 bewegen zu können.

Um sicherzustellen, dass der Sicherungsstift 352 stets die Tendenz hat, mit dem Kopf 354 in eine in dem Antriebsrad 186 vorgesehene Vertiefung einzutauchen, ist der Sicherungsstift 352 noch mit einer Druckfeder 366 in dieser Richtung beaufschlagt, die dann die formschlüssige Fixierung des Sicherungskörpers 360 in der in die erste Vertiefung 372 oder die zweite Vertiefung 376 eingreifenden Stellung so lange aufrecht erhält, bis durch Drehen des Antriebsrads 186 der Kopf 354 des Sicherungsstifts 352 wieder aus einer der Vertiefungen 372 oder 376 herausbewegt und somit der Sicherungsstift 352 in die Bohrung 362 eingedrückt ist.

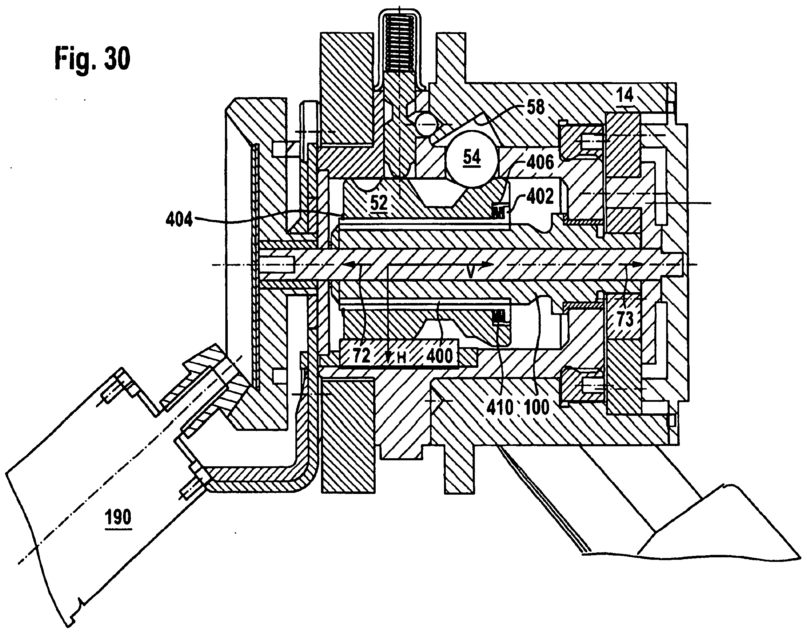

Bei einem vierten Ausführungsbeispiel, dargestellt in Fig. 30 sind diejenigen Teile, die mit denen der voranstehenden Ausführungsbeispiele identisch sind, mit denselben Bezugszeichen versehen, so dass hinsichtlich der Beschreibung derselben vollinhaltlich auf die Ausführungen zu den voranstehenden Ausführungsbeispielen Bezug genommen werden kann.

Im Gegensatz zu den voranstehenden Ausführungsbeispielen ist bei dem vierten Ausführungsbeispiel, dargestellt in Fig. 30 unmittelbar auf der Gewindespindel 100 als Spindelmutter eine Gewindehülse 400 angeordnet, welche als Spindelmutter auf der Gewindespindel in den Richtungen 72 und 73 verschiebbar ist.

Diese Gewindehülse 400 führt auf ihrer der Gewindespindel 100 abgewandten Seite den Betätigungskörper 52, der jedoch gegenüber der Gewindehülse 400 zwischen Anschlagelementen 402 und 404 begrenzt verschiebbar ist.

Ferner sind zwischen dem als Flansch ausgebildeten Anschlagelement 402 und einer diesem zugewandten Flanschfläche 406 des Betätigungskörpers 52 federelastische Elemente, beispielsweise ein Tellerfederpaket 410, vorgesehen, welche den Betätigungskörper 52 stets so beaufschlagen, dass dieser an dem Anschlagelement 404 anliegt.

Wird jedoch der Betätigungskörper 52 über die Gewindespindel 100 und die Gewindehülse 400 in Richtung 72 so weit bewegt, dass die Drehblockierkörper 54 in ihrer Drehblockierstellung stehen und in den für die Fixierung des Schwenklagerkörpers 14 in der Arbeitsstellung A vorgesehenen Aufnahmen 58 kraftbeaufschlagt eingepresst sind, so besteht die Möglichkeit, durch weiteren Antrieb der Gewindespindel 100 das Tellerfederpaket 410 durch Zusammendrücken unter Spannung zu bringen und den Antrieb der Gewindespindel 100 erst dann abzuschalten, wenn eine ausreichend große Spannung im Tellerfederpaket 410 vorliegt.

Hierzu muss dann der Betätigungskörper 52 in Richtung des Flansches 402 unter Abheben von dem Anschlagelement 404 bewegt werden.

Damit besteht die Möglichkeit, in der Arbeitsstellung eine selbstnachstellende Beaufschlagung der Drehblockierkörper 54 in der Drehblockierstellung zu erhalten, da selbst ein geringfügiger Verschleiß im Bereich der Aufnahmen 58 durch eine geringfügige Bewegung des Drehblockierkörpers 54 in der Richtung 72 aufgrund der stets vorherrschenden Kraftwirkung des gespannten Tellerfederpakets 410 möglich ist, ohne dass hierzu eine weitere Bewegung der Gewindespindel 100 durch den Gesamtantrieb 190 erforderlich ist.

Wird dagegen die Gewindespindel 100 so angetrieben, dass die Gewindehülse 400 und der Drehblockierkörper 54 in Richtung 73 bewegt werden, so wird die Spannung des Tellerfederpakets 410 so weit gelöst, bis der Betätigungskörper 52 wiederum an dem Anschlagelement 404 anliegt, und dann bewegen sich die Gewindehülse 400 und der Betätigungskörper 52 synchron miteinander.

Im Übrigen sind bei dem vierten Ausführungsbeispiel all diejenigen Teile, die mit denen der voranstehenden Ausführungsbeispiele identisch sind, mit denselben Bezugszeichen versehen, so dass hinsichtlich der Beschreibung derselben vollinhaltlich auf die Ausführungen zu den voranstehenden Ausführungsbeispielen verwiesen werden kann.

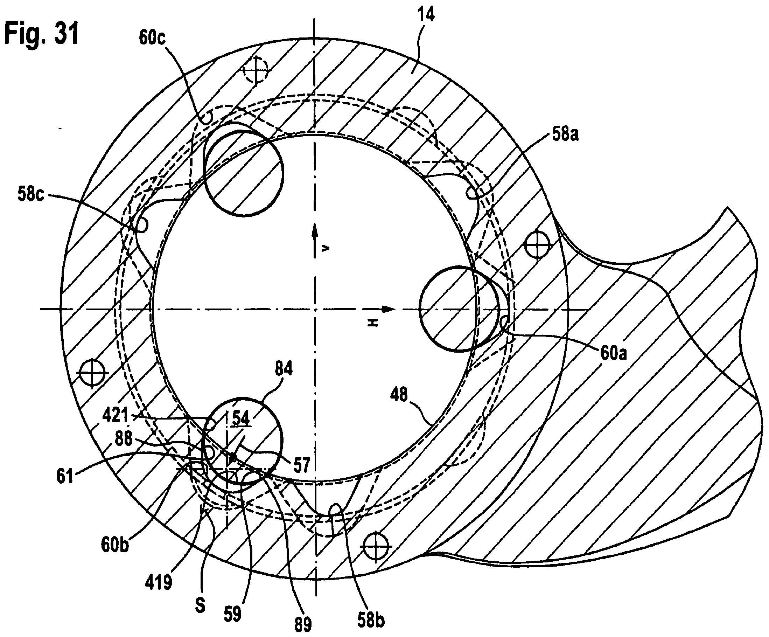

Bei einem fünften Ausführungsbeispiel, dargestellt in Fig. 31, sind die Aufnahmen 58, 60 so ausgebildet, dass diese Wandflächen 59 und 61 aufweisen, die in unmittelbarem Anschluss an die Innenfläche 48 des Schwenklagerkörpers 14 im Wesentlichen eben ausgebildete Anlagebereiche 419 und 421 aufweisen, an welchen die Drehblockierkörper mit ihren einander gegenüberliegenden Seiten 89 und 88 von deren Mantelfläche 84 in der Drehblockierstellung anliegen, wobei die Ausführung der Anlagebereiche 419, 421 als im Wesentlichen ebene Bereiche den Vorteil haben, dass der jeweilige Drehblockierkörper 54 stets in dem selben Tangentenwinkel an dem jeweiligen Anlagebereich 419, 421 zur Anlage kommen kann, unabhängig davon, ob sich dieser Anlagebereich durch Verschleiß weitet, so dass der jeweilige Drehblockierkörper 54 dann in der Führungsrichtung 57 über eine größere Strecke in die jeweilige Aufnahme 58, 60 eintauchen muss, um eine spielfreie Fixierung des Schwenklagerkörpers 14 zu gewährleisten.

Somit ändern sich unabhängig von dem Verschleiß im Bereich der Aufnahmen 58, 60 die Bedingungen für die Anlage des jeweiligen Drehblockierkörpers 54 in den Aufnahmen 58, 60 nicht.

Vorzugsweise sind die ebenen Anlagebereiche 419, 421 so zueinander ausgerichtet, dass sie einen spitzen Winkel S miteinander einschließen.

Im Übrigen ist auch das fünfte Ausführungsbeispiel in gleicher Weise ausgebildet wie die voranstehenden Ausführungsbeispiele, so dass hinsichtlich der Beschreibung desselben vollinhaltlich auf die Ausführungen zu den voranstehenden Ausführungsbeispielen Bezug genommen werden kann.

## Patentansprüche

1. Anhängekupplung umfassend einen zwischen einer Arbeitsstellung und einer Ruhestellung bewegbaren Kugelhals (10) mit einem an einem ersten Ende angeordneten Schwenklagerkörper (14) und einer an einem zweiten Ende angeordneten Kupplungskugel (18), eine fahrzeugfest angeordnete Schwenklagereinheit (20), in welcher der Schwenklagerkörper (14) durch eine Schwenkbewegung um eine Schwenkachse (22) zwischen der Arbeitsstellung (A) und der Ruhestellung (R) verschwenkbar aufgenommen ist, und eine durch einen Antrieb (114, 190) antreibbare Drehblockiereinrichtung (50)
wobei die Drehblockiereinrichtung (50) mindestens einen Drehblockierkörper (54) aufweist, der in einer Führungsrichtung (57) mit mindestens einer Komponente in radialer Richtung zur Schwenkachse (22) bewegbar ist, wobei der mindestens eine Drehblockierkörper (54) durch einen sich in radialer Richtung an den Schwenklagerkörper (14) anschließenden Führungskörper (40) geführt ist, wobei der Führungskörper (40) so angeordnet ist, dass er Teil der fahrzeugfest angeordneten Schwenklagereinheit (20) ist, wobei der Drehblockierkörper (54) durch Bewegung in der Führungsrichtung (57) mit einer Aufnahme (58, 60) in Eingriff und außer Eingriff bringbar ist, wobei ein eine quer zur Führungsrichtung (57) verlaufende Druckfläche (66) aufweisender und in einer Betätigungsrichtung (64) bewegbarer Betätigungskörper (52) vorgesehen ist, durch dessen Bewegung in der Betätigungsrichtung (64) der mindestens eine Drehblockierkörper (54) in der Führungsrichtung (57) bewegbar und beaufschlagbar ist, wobei der Betätigungskörper (54) von dem Führungskörper (40) umschlossen ist, und wobei der Antrieb (114, 190) ein Stellantrieb ist, mit welchem der Betätigungskörper (52) in der Betätigungsrichtung (64) zwischen mindestens einer Drehblockierstellung und einer Freilaufstellung bewegbar ist, **dadurch gekennzeichnet, dass** der Schwenklagerkörper (14) den Führungskörper (40) umgreift, dass der Schwenklagerkörper (14) einen die Schwenklagereinheit (20) außenliegend umschließenden Außenkörper bildet, der gegenüber der Schwenklagereinheit (20) in Richtung der Schwenkachse (22) unverschiebbar angeordnet ist,
dass der Antrieb (114, 190) über ein selbsthemmendes Getriebe (100, 104, 106) auf den Betätigungskörper (52) wirkt, und dass das selbsthemmende Getriebe (100, 104, 106) den Betätigungskörper (52) in die mindestens eine Drehblockierstellung oder die Freilaufstellung bewegt und in dieser hält.

2. Anhängekupplung nach Anspruch 1, **dadurch gekennzeichnet, dass** der Antrieb (114, 190) über das selbsthemmende Getriebe (100, 104, 106) auf den Betätigungskörper (52) wirkt und das selbsthemmende Getriebe (100, 104, 106) ein Spindelgetriebe mit einer Gewindespindel (100) umfasst.

3. Anhängekupplung nach Anspruch 2, **dadurch gekennzeichnet, dass** der Betätigungskörper (52) durch eine mit der Gewindespindel (100) zusammenwirkende Spindelmutter (52, 400) bewegbar ist und dass insbesondere der Betätigungskörper (52) die Gewindespindel (100) umgebend angeordnet ist.

4. Anhängekupplung nach einem der voranstehenden Ansprüche, **dadurch gekennzeichnet, dass** der Betätigungskörper (52) in seiner Betätigungsrichtung (64) aufeinanderfolgend eine Rückzugsaufnahme (62) und eine Druckfläche (66) für den mindestens einen Drehblockierkörper (54) aufweist.

5. Anhängekupplung nach einem der voranstehenden Ansprüche, **dadurch gekennzeichnet, dass** der Betätigungskörper (52) in zwei Drehblockierstellungen bewegbar ist.

6. Anhängekupplung nach Anspruch 5, **dadurch gekennzeichnet, dass** der Betätigungskörper (52) durch eine Bewegung in einer einzigen Bewegungsrichtung (72, 73) von einer ersten Drehblockierstellung in eine Freilaufstellung und dann in eine zweite Drehblockierstellung bewegbar ist.

7. Anhängekupplung nach einem der voranstehenden Ansprüche, **dadurch gekennzeichnet, dass** der Betätigungskörper (52) für jeden Drehblockierkörper (54) zwei Druckflächen (66a, b) aufweist.

8. Anhängekupplung nach Anspruch 7, **dadurch gekennzeichnet, dass** zwischen den zwei Druckflächen (66a, b) eine Rückzugsaufnahme (62) für den jeweiligen Drehblockierkörper (54) angeordnet ist.

9. Anhängekupplung nach einem der voranstehenden Ansprüche, **dadurch gekennzeichnet, dass** ein Antrieb (124, 190) für das Ausführen der Schwenkbewegung des Schwenklagerkörpers (14) vorgesehen ist.

10. Anhängekupplung nach einem der voranstehenden Ansprüche, **dadurch gekennzeichnet, dass** der Betätigungskörper (52) in der Arbeitsstellung durch eine Sicherungsvorrichtung (350) gesichert ist.

11. Anhängekupplung nach einem der voranstehenden Ansprüche, **dadurch gekennzeichnet, dass** die Aufnahmen (58, 60) für den mindestens einen Drehblockierkörper (54) im Wesentlichen ebene Anlagebereiche (419, 421) aufweisen an denen die Drehblockierkörper (54) in der Drehblockierstellung anlegbar sind.

12. Anhängekupplung nach Anspruch 11, **dadurch gekennzeichnet, dass** die Anlagebereiche (419, 421) sich in der Führungsrichtung (57) über einen Nachstellbereich der Drehblockierkörper (54) erstrecken.

13. Anhängekupplung nach einem der voranstehenden Ansprüche, **dadurch gekennzeichnet, dass** die Drehblockiereinrichtung (50) mindestens drei Drehblockierkörper (54) umfasst, dass die Drehblockierkörper durch einen gemeinsamen Betätigungskörper in der jeweiligen Führungsrichtung bewegbar sind, und dass insbesondere die Drehblockierkörper (54) derart relativ zum Betätigungskörper (52) angeordnet sind, dass sich mindestens deren quer zur Schwenkachse (22) gerichtete und auf den Betätigungskörper (52) wirkenden Reaktionskräfte (RK) zumindest zum Teil kompensieren.

14. Anhängekupplung nach einem der voranstehenden Ansprüche, **dadurch gekennzeichnet, dass** mindestens zwei Drehblockierkörper (54) vorgesehen sind, dass die Drehblockierkörper durch einen gemeinsamen Betätigungskörper in der jeweiligen Führungsrichtung bewegbar sind, und die Drehblockierkörper (54) mit den für diese vorgesehenen Aufnahmen (58, 60) derart zusammenwirken, dass diese einander entgegengesetzt wirkende Drehmomente (90, 92) auf den Schwenklagerkörper (14) erzeugen.

## Claims

1. Trailer coupling comprising a ball neck (10) which can be moved between an operating position and a rest position and has a pivot-bearing body (14) disposed at a first end and a coupling ball (18) disposed at a second end, also comprising a vehicle-mounted pivot-bearing unit (20), in which the pivot-bearing body (14) is accommodated such that it can be pivoted between the operating position (A) and the rest position (R) by a pivoting movement about a pivot axis (22), and further comprising a rotation-blocking device (50) which can be driven by a drive (114, 190),
the rotation-blocking device (50) having at least one rotation-blocking body (54) which can be moved in a guide direction (57) with at least one component in the radial direction in relation to the pivot axis (22), the at least one rotation-blocking body (54) being guided by a guide body (40) which adjoins the pivot-bearing body (14) in the radial direction, the guide body (40) being disposed such that it is part of the vehicle-mounted pivot-bearing unit (20), the rotation-blocking body (54) being engageable with, and disengageable from, a receiving region (58, 60)) by movement in the guide direction (57), there being provided an actuating body (52) which can be moved in an actuating direction (64) and has a pressure-exerting surface (66) running transversely to the guide direction (57), the movement of the actuating body in the actuating direction (64) allowing the at least one rotation-blocking body (54) to be moved, and acted on, in the guide direction (57), the pivot-bearing body (54) being enclosed by the guide body (40), and the drive (114, 190) being an actuating drive by means of which the actuating body (52) can be moved in the actuating direction (64) between at least one rotation-blocking position and a freewheeling position, **characterized in that** the pivot-bearing body (14) engages around the guide body (40), **in that** the pivot-bearing body (14) forms an outer body which encloses the pivot-bearing unit (20) on the outside and is disposed such that it cannot be displaced in the direction of the pivot axis (22) in relation to the pivot-bearing unit (20),
**in that** the drive (114, 190) acts on the actuating body (52) via a self-inhibiting gear mechanism (100, 104, 106), and **in that** the self-inhibiting gear mechanism (100, 104, 106) moves the actuating body (52) into the at least one rotation-blocking position or the freewheeling position, and keeps it in this position.

2. Trailer coupling according to Claim 1, **characterized in that** the drive (114, 190) acts on the actuating body via the self-inhibiting gear mechanism (100, 104, 106) and the self-inhibiting gear mechanism (100, 104, 106) comprises a spindle gear mechanism with a threaded spindle (100).

3. Trailer coupling according to Claim 2, **characterized in that** the actuating body (52) can be moved by a spindle nut (52, 400) interacting with the threaded spindle (100), and **in that** in particular the actuating body (52) is disposed such that it encloses the threaded spindle (100).

4. Trailer coupling according to any of the preceding claims, **characterized in that** the actuating body (52) has, following one after the other in its actuating direction (64), a withdrawn-position receiving region (62) and a pressure-exerting surface (66) for the at least one rotation-blocking body (54).

5. Trailer coupling according to any of the preceding claims, **characterized in that** the actuating body (52) can be moved into two rotation-blocking positions.

6. Trailer coupling according to Claim 5, **characterized in that** the actuating body (52) can be moved, by a movement in a single movement direction (72, 73), from a first rotation-blocking position into a freewheeling position and then into a second rotation-blocking position.

7. Trailer coupling according to any of the preceding claims, **characterized in that** the actuating body (52) has two pressure-exerting surfaces (66a, b) for each rotation-blocking body (54).

8. Trailer coupling according to Claim 7, **characterized in that** a withdrawn-position receiving region (62) for the respective rotation-blocking body (54) is disposed between the two pressure-exerting surfaces (66a, b).

9. Trailer coupling according to any of the preceding claims, **characterized in that** a drive (124, 190) is provided for executing the pivoting movement of the pivot-bearing body (14).

10. Trailer coupling according to any of the preceding claims, **characterized in that** the actuating body (52) is secured in the operating position by a securing arrangement (350).

11. Trailer coupling according to any of the preceding claims, **characterized in that** the receiving regions (58, 60)) for the at least one rotation-blocking body (54) have substantially planar abutment regions (419, 421), against which it is possible to apply the rotation-blocking bodies (54) in the rotation-blocking position.

12. Trailer coupling according to Claim 11, **characterized in that** the abutment regions (419, 421) extend, in the guide direction (57), over an adjusting region of the rotation-blocking bodies (54).

13. Trailer coupling according any of the preceding claims, **characterized in that** the rotation-blocking device (50) comprises at least three rotation-blocking bodies (54), **in that** the rotation-blocking bodies can be moved in the respective guide direction by a common actuating body, and **in that** in particular the rotation-blocking bodies (54) are disposed relative to the actuating body (52) such that at least their reaction forces (RK) acting on the actuating body (52), and directed transversely to the pivot axis (22), compensate for one another at least in part.

14. Trailer coupling according to any of the preceding claims, **characterized in that** at least two rotation-blocking bodies (54) are provided, **in that** the rotation-blocking bodies can be moved in the respective guide direction by a common actuating body, and the rotation-blocking bodies (54) interact with the receiving regions (58, 60)) provided for these bodies such that these bodies subject the pivot-bearing body (14) to opposing torques (90, 92).

## Revendications

1. Attelage comportant un manchon (10) pouvant être déplacé entre une position de travail et une position de repos avec un corps de palier pivotant (14) disposé au niveau d'une première extrémité et une boule d'attelage (18) disposée au niveau d'une deuxième extrémité, une unité de palier pivotant (20) fixée solidement au véhicule, dans laquelle le corps de palier pivotant (14) est logé de manière pivotante selon un mouvement pivotant autour d'un axe de pivotement (22) entre la position de travail (A) et la position de repos (R), et un dispositif de blocage en rotation (50) pouvant être entraîné par un mécanisme (114, 190) d'entraînement,
dans lequel le dispositif de blocage en rotation (50) comporte au moins un corps de blocage en rotation (54) qui peut être déplacé dans un sens de guidage (57) selon au moins un composant dans le sens radial vers l'axe de pivotement (22), dans lequel l'au moins un corps de blocage en rotation (54) est guidé par un corps de guidage (40) se raccordant au corps de palier pivotant (14) dans le sens radial, dans lequel le corps de guidage (40) est disposé de sorte qu'il fasse partie de l'unité de palier pivotant (20) fixée solidement au véhicule, dans lequel le corps de blocage en rotation (54) peut être amené par un mouvement dans le sens de guidage (57) en prise et hors prise avec un logement (58, 60), dans lequel un actionneur (52) mobile dans un sens d'actionnement (64) et comportant une surface de serrage (66) passant transversalement par rapport au sens de guidage (57) est prévu, à travers le mouvement duquel dans le sens d'actionnement (64) l'au moins un corps de blocage en rotation (54) peut être déplacé et alimenté dans le sens de guidage (57), dans lequel l'actionneur (52) est entouré par le corps de guidage (40), et dans lequel le mécanisme d'entraînement (114, 190) est un mécanisme de commande, avec lequel l'actionneur (52) peut être déplacé dans le sens d'actionnement (64) entre au moins une position de blocage en rotation et une position de course libre, **caractérisé en ce que** le corps de palier pivotant (14) entoure le corps de guidage (40), **en ce que** le corps de palier pivotant (14) forme un corps extérieur entourant à l'extérieur l'unité de palier pivotant (20) qui est disposé de manière immobile par rapport à l'unité de palier pivotant (20) dans le sens de l'axe de pivotement (22),
**que** le mécanisme d'entraînement (114, 190) agit sur l'actionneur (52) par le biais d'un mécanisme autobloquant (100, 104, 106), et **en ce que** le mécanisme autobloquant (100, 104, 106) déplace l'actionneur (52) dans l'au moins une position de blocage en rotation ou la position de course libre et s'arrête dans celle-ci.

2. Attelage selon la revendication 1, **caractérisé en ce que** le mécanisme d'entraînement (114, 190) agit sur l'actionneur (52) par le biais du mécanisme autobloquant (100, 104, 106) et **en ce que** le mécanisme autobloquant (100, 104, 106) comprend un entraînement à broche avec une broche filetée (100).

3. Attelage selon la revendication 2, **caractérisé en ce que** l'actionneur (52) peut être déplacé par un écrou à broche (52, 400) coopérant avec la broche filetée (100) et **en ce qu'**en particulier l'actionneur (52) est disposé de manière à entourer la broche filetée (100).

4. Attelage selon l'une quelconque des revendications précédentes, **caractérisé en ce que** l'actionneur (52) comporte dans son sens d'actionnement (64) à la suite l'un de l'autre un logement de retour (62) et une surface de serrage (66) pour l'au moins un corps de blocage en rotation (54).

5. Attelage selon l'une quelconque des revendications précédentes, **caractérisé en ce que** l'actionneur (52) peut être déplacé dans deux positions de blocage en rotation.

6. Attelage selon la revendication 5, **caractérisé en ce que** l'actionneur (52) peut être déplacé par un mouvement dans un seul sens de déplacement (72, 73) à partir d'une première position de blocage en rotation dans une position de course libre et ensuite dans une deuxième position de blocage en rotation.

7. Attelage selon l'une quelconque des revendications précédentes, **caractérisé en ce que** l'actionneur (52) comporte pour chaque corps de blocage en rotation (54) deux surfaces de serrage (66a, b).

8. Attelage selon la revendication 7, **caractérisé en ce qu'**un logement de retour (62) est disposé, pour le corps de blocage en rotation respectif (54), entre les deux surfaces de serrage (66a, b).

9. Attelage selon l'une quelconque des revendications précédentes, **caractérisé en ce qu'**un mécanisme d'entraînement (124, 190) est prévu pour la réalisation du mouvement pivotant du corps du palier pivotant (14).

10. Attelage selon l'une quelconque des revendications précédentes, **caractérisé en ce que** l'actionneur (52) dans la position de travail est fixé par un dispositif d'arrêt (350).

11. Attelage selon l'une quelconque des revendications précédentes, **caractérisé en ce que** les logements (58, 60) pour l'au moins un corps de blocage en rotation (54) présentent essentiellement des zones de réception planes (419, 421) sur lesquelles peuvent être montés les éléments de blocage en rotation (54) dans la position de blocage en rotation.

12. Attelage selon la revendication 11, **caractérisé en ce que** les zones de réception (419, 421) s'étendent dans le sens du guidage (57) sur une zone d'ajustage du corps de blocage en rotation (54).

13. Attelage selon l'une quelconque des revendications précédentes, **caractérisé en ce que** le dispositif de blocage en rotation (50) comprend au moins trois corps de blocage en rotation (54), **en ce que** les corps de blocage en rotation sont mobiles par un actionneur commun dans le sens de guidage respectif, et **en ce qu'**en particulier les corps de blocage en rotation (54) sont disposés par rapport à l'actionneur (52) de telle manière qu'au moins leurs forces de réaction (RK) dirigées transversalement par rapport à l'axe de pivotement (22) et agissant sur l'actionneur (52) se compensent au moins en partie.

14. Attelage selon l'une quelconque des revendications précédentes, **caractérisé en ce qu'**au moins deux corps de blocage en rotation (54) sont prévus, **en ce que** les corps de blocage en rotation sont mobiles par un actionneur commun dans le sens de guidage respectif, et les corps de blocage en rotation (54) coopèrent avec les logements (58, 60) prévus pour ceux-ci de telle manière que ceux-ci produisent des couples de rotation (90, 92) agissant à l'opposé les uns des autres sur les corps de palier pivotant (14).
